(19) **Europäisches Patentamt**
**European Patent Office**
**Office européen des brevets**

(11) **EP 4 757 229 A1**

(12) **EUROPEAN PATENT APPLICATION**

(43) Date of publication:
**10.06.2026 Bulletin 2026/24**

(21) Application number: **25218280.3**

(22) Date of filing: **25.11.2025**

(51) International Patent Classification (IPC):
**H04L 5/00** $^{(2006.01)}$

(52) Cooperative Patent Classification (CPC):
**H04L 5/0094; H04L 5/0044; H04L 5/0048;**
H04B 7/0404; H04L 5/0012; H04L 5/0023;
H04L 5/0051

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **05.12.2024 US 202463728337 P**

(71) Applicant: **Nokia Technologies Oy**
**02610 Espoo (FI)**

(72) Inventors:
• **KARJALAINEN, Juha Pekka**
**Sotkamo (FI)**
• **TIIROLA, Esa Tapani**
**Oulu (FI)**
• **TERVO, Oskari**
**Oulu (FI)**
• **LUOTO, Petri**
**Oulu (FI)**

(74) Representative: **Nokia EPO representatives**
**Nokia Technologies Oy**
**Karakaari 7**
**02610 Espoo (FI)**

(54) **METHOD, APPARATUS AND COMPUTER PROGRAM FOR REFERENCE SIGNAL CONFIGURATION**

(57)     There is provided a user equipment comprising at least one processor, and at least one memory storing instructions that, when executed by the at least one processor, cause the user equipment to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot. The user equipment is further caused to perform: based on the configuration, transmitting, to a network entity, a first physical uplink shared channel, PUSCH, wherein the at least one first antenna port for the first type of RS is configured with the first RE pattern in the first PUSCH.

FIG. 7

FIG. 7

UE — gNB

S701. Capability signalling about supported RS types that are supported by the UE for PUSCH transmission

S702. Capability signalling about supported types of frequency hopping for RSs and multiplexing for PUSCH transmission

S703. Determine RS configuration for the UE for a PUSCH transmission

S704. RS configuration for PUSCH, e.g., RRC signalling

S705. Store RS configuration for PUSCH transmission

S706. Scheduling request for UL data transmission

S707. Scheduling grant for PUSCH, e.g., via PHY layer signalling, or PDCCH with DCI. First indication (e.g., 'REs for data with RS') = '0' or '1'

S708. Based on the RS configuration, determine an RE pattern, a number of REs, frequency information, and time information, for RSs in each RB/PRB across a scheduled PUSCH bandwidth

Alt.1 (First indication = 1) S709a. UE rate-matches the PUSCH TB based on the RE pattern and 'empty' RE locations in freq domain not used for the RE pattern

Alt.2 (First indication = 0) S709b. UE rate-matches the PUSCH TB based on the RE pattern

S711. Receive PUSCH and determine channel estimates for PUSCH demodulation

S712. Based on the channel estimation, demodulate the PUSCH transmission

S710. Transmit PUSCH based on the RE pattern

**Description**

TECHNICAL FIELD

Various examples of this disclosure relate to methods, apparatuses, and computer programs. In particular, methods, apparatuses, and computer programs for a communication network.

BACKGROUND

A communication network can be seen as a facility that enables communications between two or more communication devices, and/or provide communication devices access to a data network. A mobile or wireless communication network is one example of a communication network. A communication device may be provided with a service by an application server.

Such communication networks operate in accordance with standards such as those provided by 3GPP (Third Generation Partnership Project) or ETSI (European Telecommunications Standards Institute). Examples of standards are the so-called 5G (5th Generation) standards provided by 3GPP.

SUMMARY

Some examples of this disclosure will be described with respect to certain aspects. These aspects are not intended to indicate key or essential features of the embodiments of this disclosure, nor are they intended to be used to limit the scope thereof. Other features, aspects, and elements will be readily apparent to a person skilled in the art in view of this disclosure. For example, it should be appreciated that further aspects may be provided by the combination of any two or more of the various aspects described below.

According to a first aspect, there is provided a user equipment comprising at least one processor, and at least one memory storing instructions that, when executed by the at least one processor, cause the user equipment to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

According to a second aspect, there is provided a user equipment comprising means for: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

According to a third aspect, there is provided a user equipment comprising: circuitry configured to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

According to a fourth aspect, there is provided a method performed by a user equipment, comprising: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

According to a fifth aspect, there is provided a computer program comprising instructions, which when executed by a user equipment, cause the user equipment to perform at least the following: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

The following are applicable to each (e.g., one or more, including all) of the above first to fifth aspects.

In some examples, the configuration for the first RE pattern for the first type of RS for the at least one first antenna port indicates: iv) information related to at least one symbol position for the first RE pattern.

In some examples, the at least one first antenna port for the first type of RS is configured with the first number of REs in an RB across the first number of symbols, in the first PUSCH, based on i) the first number of REs for each antenna port per RB and iii) the first number of symbols per slot.

In some examples, at least one of: the first number of REs is at least one and fewer than all of the REs in the RB, or the first number of symbols is at least one and fewer than all of the symbols in a slot.

In some examples, the configuration for the first RE pattern for the first type of RS for the at least one first antenna port indicates at least one of the following: v) a hopping in frequency, or vi) a hopping in time, between RBs across a scheduled bandwidth of the first PUSCH.

In some examples, there are a plurality of RBs across a bandwidth of the first PUSCH, and wherein the at least one first antenna port for the first type of RS is configured with the first number of REs in at least every second RB of the plurality of RBs across the bandwidth of the first PUSCH, based on ii) the first density level between RBs.

In some examples, the configuration for RSs indicates a second RE pattern for a second type of RS for at least one second antenna port, wherein the configuration for the second RE pattern for the second type of RS for the at least one second antenna port indicates: i) a second number of REs for each antenna port per resource block, RB, ii) a second density level between RBs, and iii) a second number of symbols per slot.

In some examples, the configuration for the second RE pattern for the second type of RS for the at least one second antenna port indicates: iv) information related to at least one symbol position for the second RE pattern.

In some examples, for the first PUSCH that is transmitted to the network entity, the at least one first antenna port for the first type of RS in the first PUSCH is configured with the first RE pattern and at least one second antenna port for the second type of RS in the first PUSCH is configured with the second RE pattern.

In some examples, at least one of the following: the first type of RS and the second type of RS are different, or the first type of RS and the second type of RS are the same type of RS.

In some examples, at least one of the following: the first RE pattern and the second RE pattern are different, or the first RE pattern and the second RE pattern are the same RE pattern.

In some examples, at least one of the following: based on the i) the first number of REs for each antenna port per RB, the REs in an RB configured with at least one of the first type of RS, are uniformly distributed throughout the REs of the RB, or based on the i) the second number of REs for each antenna port per RB, the REs in an RB configured with at least one of the second type of RS, are uniformly distributed throughout the REs of the RB.

In some examples, at least one of: the second number of REs is at least one and fewer than all of the REs in the RB, or the second number of symbols is at least one and fewer than all of the symbols in a slot.

In some examples, the configuration for the second RE pattern for the second type of RS for the at least one second antenna port indicates at least one of the following: v) a hopping in frequency, or vi) a hopping in time, between RBs across a scheduled bandwidth of the first PUSCH.

In some examples, the at least one first antenna port for the first type of RS that is configured with the first number of REs and the at least one second antenna port for the second type of RS that is configured with the second number of REs are configured with REs in different symbols of a slot of the first PUSCH.

In some examples, there are a plurality of RBs across a bandwidth of the first PUSCH, and wherein the at least one second antenna port for the second type of RS is configured with the second number of REs in at least every second RB of the plurality of RBs across the bandwidth of the first PUSCH, based on ii) the second density level between RBs.

In some examples, the configuration indicates: the first RE pattern for the first type of RS for at least one first antenna port, and an additional RE pattern for the first type of RS for the at least one first antenna port.

In some examples, the first type of RS is one of: a demodulation reference signal, DMRS, or a phase-tracking reference signal, PTRS.

In some examples, the second type of RS is one of: a DMRS, or a PTRS.

In some examples, the configuration related to reference signals is received from the network entity.

According to a sixth aspect, there is provided a user equipment comprising at least one processor, and at least one memory storing instructions that, when executed by the at least one processor, cause the user equipment to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a network entity, a first physical downlink shared channel, PDSCH, wherein the at least one first antenna port for the first type of RS is configured with the first RE pattern in the first PDSCH; and demodulating the first PDSCH based on the configuration.

According to a seventh aspect, there is provided a user equipment comprising means for: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a network entity, a first physical downlink shared channel, PDSCH, wherein the at least one first antenna port for the first type of RS is configured with the first RE pattern in the first PDSCH; and demodulating the first PDSCH based on the configuration.

According to an eight aspect, there is provided a user equipment comprising: circuitry configured to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a network entity, a first physical downlink shared channel, PDSCH, wherein the at least one first antenna port for the first type of RS is configured with the first RE pattern in the first PDSCH; and demodulating the first PDSCH based on the configuration.

According to a ninth aspect, there is provided a method performed by a user equipment, comprising: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a network entity, a first physical downlink shared channel, PDSCH, wherein the at least one first antenna port for the first type of RS is configured with the first RE pattern in the first PDSCH; and demodulating the first PDSCH based on the configuration.

According to a tenth aspect, there is provided a computer program comprising instructions, which when executed by a user equipment, cause the user equipment to perform at least the following: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a network entity, a first physical downlink shared channel, PDSCH, wherein the at least one first antenna port for the first type of RS is configured with the first RE pattern in the first PDSCH; and demodulating the first PDSCH based on the configuration.

The following are applicable to each (e.g., one or more, including all) of the above sixth to tenth aspects.

In some examples, the configuration for the first RE pattern for the first type of RS for the at least one first antenna port indicates: iv) information related to at least one symbol position for the first RE pattern.

In some examples, the at least one first antenna port for the first type of RS is configured with the first number of REs in an RB across the first number of symbols, in the first PDSCH, based on i) the first number of REs for each antenna port per RB and iii) the first number of symbols per slot.

In some examples, at least one of: the first number of REs is at least one and fewer than all of the REs in the RB, or the first number of symbols is at least one and fewer than all of the symbols in a slot.

In some examples, the configuration for the first RE pattern for the first type of RS for the at least one first antenna port indicates at least one of the following: v) a hopping in frequency, or vi) a hopping in time, between RBs across a scheduled bandwidth of the first PDSCH.

In some examples, the demodulating comprises: based on at least one of: v) the hopping in frequency, or vi) the hopping in time, for the first RE pattern, demodulating the PDSCH.

In some examples, there are a plurality of RBs across a bandwidth of the first PDSCH, and wherein the at least one first antenna port for the first type of RS is configured with the first number of REs in at least every second RB of the plurality of RBs across the bandwidth of the first PDSCH, based on ii) the first density level between RBs.

In some examples, the configuration for RSs indicates a second RE pattern for a second type of RS for at least one second antenna port, wherein the configuration for the second RE pattern for the second type of RS for the at least one second antenna port indicates: i) a second number of REs for each antenna port per resource block, RB, ii) a second density level between RBs, and iii) a second number of symbols per slot.

In some examples, the configuration for the second RE pattern for the second type of RS for the at least one second antenna port indicates: iv) information related to at least one symbol position for the second RE pattern.

In some examples, for the first PDSCH, the at least one first antenna port for the first type of RS in the first PDSCH is configured with the first RE pattern and at least one second antenna port for the second type of RS in the first PDSCH is configured with the second RE pattern.

In some examples, at least one of the following: the first type of RS and the second type of RS are different, or the first type of RS and the second type of RS are the same type of RS.

In some examples, at least one of the following: the first RE pattern and the second RE pattern are different, or the first RE pattern and the second RE pattern are the same RE pattern.

In some examples, at least one of the following: based on the i) the first number of REs for each antenna port per RB, the REs in an RB configured with at least one of the first type of RS, are uniformly distributed throughout the REs of the RB, or based on the i) the second number of REs for each antenna port per RB, the REs in an RB configured with at least one of the second type of RS, are uniformly distributed throughout the REs of the RB.

In some examples, at least one of: the second number of REs is at least one and fewer than all of the REs in the RB, or the second number of symbols is at least one and fewer than all of the symbols in a slot.

In some examples, the configuration for the second RE pattern for the second type of RS for the at least one second antenna port indicates at least one of the following: v) a hopping in frequency, or vi) a hopping in time, between RBs across a scheduled bandwidth of the first PDSCH.

In some examples, the demodulating comprises: based on at least one of: v) the hopping in frequency, or vi) the hopping in time, for the second RE pattern, demodulating the PDSCH.

In some examples, the at least one first antenna port for the first type of RS that is configured with the first number of REs and the at least one second antenna port for the second type of RS that is configured with the second number of REs are configured with REs in different symbols of a slot of the first PDSCH.

In some examples, there are a plurality of RBs across a bandwidth of the first PDSCH, and wherein the at least one second antenna port for the second type of RS is configured with the second number of REs in at least every second RB of the plurality of RBs across the bandwidth of the first PDSCH, based on ii) the second density level between RBs.

In some examples, the configuration indicates: the first RE pattern for the first type of RS for at least one first antenna port, and an additional RE pattern for the first type of RS for the at least one first antenna port.

In some examples, the first type of RS is one of: a demodulation reference signal, DMRS, or a phase-tracking reference signal, PTRS.

In some examples, the second type of RS is one of: a DMRS, or a PTRS.

In some examples, the configuration related to reference signals is received from the network entity.

According to an eleventh aspect, there is provided a network entity comprising at least one processor, and at least one memory storing instructions that, when executed by the at least one processor, cause the network entity to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a user equipment, a first physical uplink shared channel, PUSCH, wherein the at least one first antenna port for the first type of RS is configured with the first RE pattern in the first PUSCH; and demodulating the first PUSCH based on the configuration.

According to an twelfth aspect, there is provided a network entity comprising means for: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a user equipment, a first physical uplink shared channel, PUSCH, wherein the at least one first antenna port for the first type of RS is configured with the first RE pattern in the first PUSCH; and demodulating the first PUSCH based on the configuration.

According to an thirteenth aspect, there is provided a network entity comprising: circuitry configured to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a user equipment, a first physical uplink shared channel, PUSCH, wherein the at least one first antenna port for the first type of RS is configured with the first RE pattern in the first PUSCH; and demodulating the first PUSCH based on the configuration.

According to an fourteenth aspect, there is provided a method performed by a network entity, comprising: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a user equipment, a first physical uplink shared channel, PUSCH, wherein the at least one first antenna port for the first type of RS is configured with the first RE pattern in the first PUSCH; and demodulating the first PUSCH based on the configuration.

According to an fifteenth aspect, there is provided a computer program comprising instructions, which when executed by a network entity, cause the network entity to perform at least the following: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a user equipment, a first physical uplink shared channel, PUSCH, wherein the at least one first antenna port for the first type of RS is configured with the first RE pattern in the first PUSCH; and demodulating the first PUSCH based on the configuration.

The following are applicable to each (e.g., one or more, including all) of the above eleventh to fifteenth aspects.

In some examples, the configuration for the first RE pattern for the first type of RS for the at least one first antenna port indicates: iv) information related to at least one symbol position for the first RE pattern.

In some examples, the at least one first antenna port for the first type of RS is configured with the first number of REs in an RB across the first number of symbols, in the first PUSCH, based on i) the first number of REs for each antenna port per RB and iii) the first number of symbols per slot.

In some examples, at least one of: the first number of REs is at least one and fewer than all of the REs in the RB, or the first number of symbols is at least one and fewer than all of the symbols in a slot.

In some examples, the configuration for the first RE pattern for the first type of RS for the at least one first antenna port indicates at least one of the following: v) a hopping in frequency, or vi) a hopping in time, between RBs across a scheduled bandwidth of the first PUSCH.

In some examples, the demodulating comprises: based on at least one of: v) the hopping in frequency, or vi) the hopping in time, for the first RE pattern, demodulating the PUSCH.

In some examples, there are a plurality of RBs across a bandwidth of the first PUSCH, and wherein the at least one first antenna port for the first type of RS is configured with the first number of REs in at least every second RB of the plurality of RBs across the bandwidth of the first PUSCH, based on ii) the first density level between RBs.

In some examples, the configuration for RSs indicates a second RE pattern for a second type of RS for at least one second antenna port, wherein the configuration for the second RE pattern for the second type of RS for the at least one second antenna port indicates: i) a second number of REs for each antenna port per resource block, RB, ii) a second density level between RBs, and iii) a second number of symbols per slot.

In some examples, the configuration for the second RE pattern for the second type of RS for the at least one second antenna port indicates: iv) information related to at least one symbol position for the second RE pattern.

In some examples, for the first PUSCH, the at least one first antenna port for the first type of RS in the first PUSCH is configured with the first RE pattern and at least one second antenna port for the second type of RS in the first PUSCH is configured with the second RE pattern.

In some examples, at least one of the following: the first type of RS and the second type of RS are different, or the first type of RS and the second type of RS are the same type of RS.

In some examples, at least one of the following: the first RE pattern and the second RE pattern are different, or the first RE pattern and the second RE pattern are the same RE pattern.

In some examples, at least one of the following: based on the i) the first number of REs for each antenna port per RB, the REs in an RB configured with at least one of the first type of RS, are uniformly distributed throughout the REs of the RB, or based on the i) the second number of REs for each antenna port per RB, the REs in an RB configured with at least one of the second type of RS, are uniformly distributed throughout the REs of the RB.

In some examples, at least one of: the second number of REs is at least one and fewer than all of the REs in the RB, or the second number of symbols is at least one and fewer than all of the symbols in a slot.

In some examples, the configuration for the second RE pattern for the second type of RS for the at least one second antenna port indicates at least one of the following: v) a hopping in frequency, or vi) a hopping in time, between RBs across a scheduled bandwidth of the first PUSCH.

In some examples, the demodulating comprises: based on at least one of: v) the hopping in frequency, or vi) the hopping in time, for the second RE pattern, demodulating the PUSCH.

In some examples, the at least one first antenna port for the first type of RS that is configured with the first number of REs and the at least one second antenna port for the second type of RS that is configured with the second number of REs are configured with REs in different symbols of a slot of the first PUSCH.

In some examples, there are a plurality of RBs across a bandwidth of the first PUSCH, and wherein the at least one second antenna port for the second type of RS is configured with the second number of REs in at least every second RB of the plurality of RBs across the bandwidth of the first PUSCH, based on ii) the second density level between RBs.

In some examples, the configuration indicates: the first RE pattern for the first type of RS for at least one first antenna port, and an additional RE pattern for the first type of RS for the at least one first antenna port.

In some examples, the first type of RS is one of: a demodulation reference signal, DMRS, or a phase-tracking reference signal, PTRS.

In some examples, the second type of RS is one of: a DMRS, or a PTRS.

In some examples, the configuration related to reference signals is received from the network entity.

According to a sixteenth aspect, there is provided a network entity comprising at least one processor, and at least one memory storing instructions that, when executed by the at least one processor, cause the network entity to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to the user equipment, a first physical downlink shared channel, PDSCH, wherein the at least one first antenna port for the first type of RS is configured with the first RE pattern in the first PDSCH.

According to a seventeenth aspect, there is provided a network entity comprising means for: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to the user equipment, a first physical downlink shared channel, PDSCH, wherein the at least one first antenna port for the first type of RS is configured with the first RE pattern in the first PDSCH.

According to an eighteenth aspect, there is provided a network entity comprising: circuitry configured to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to the user equipment, a first physical downlink shared channel, PDSCH, wherein the at least one first antenna port for the first type of RS is configured with the first RE pattern in the first PDSCH.

According to a nineteenth aspect, there is provided a method performed by a network entity, comprising: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to the user equipment, a first physical downlink shared channel, PDSCH, wherein the at least one first antenna port for the first type of RS is configured with the first RE pattern in the first PDSCH.

According to a twentieth aspect, there is provided a computer program comprising instructions, which when executed by a network entity, cause the network entity to perform at least the following: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to the user equipment, a first physical downlink shared channel, PDSCH, wherein the at least one first antenna port for the first type of RS is configured with the first RE pattern in the first PDSCH.

The following are applicable to each (e.g., one or more, including all) of the above sixteenth to twentieth aspects.

In some examples, the configuration for the first RE pattern for the first type of RS for the at least one first antenna port indicates: iv) information related to at least one symbol position for the first RE pattern.

In some examples, the at least one first antenna port for the first type of RS is configured with the first number of REs in an RB across the first number of symbols, in the first PDSCH, based on i) the first number of REs for each antenna port per RB and iii) the first number of symbols per slot.

In some examples, at least one of: the first number of REs is at least one and fewer than all of the REs in the RB, or the first number of symbols is at least one and fewer than all of the symbols in a slot.

In some examples, the configuration for the first RE pattern for the first type of RS for the at least one first antenna port indicates at least one of the following: v) a hopping in frequency, or vi) a hopping in time, between RBs across a scheduled bandwidth of the first PDSCH.

In some examples, there are a plurality of RBs across a bandwidth of the first PDSCH, and wherein the at least one first antenna port for the first type of RS is configured with the first number of REs in at least every second RB of the plurality of RBs across the bandwidth of the first PDSCH, based on ii) the first density level between RBs.

In some examples, the configuration for RSs indicates a second RE pattern for a second type of RS for at least one second antenna port, wherein the configuration for the second RE pattern for the second type of RS for the at least one second antenna port indicates: i) a second number of REs for each antenna port per resource block, RB, ii) a second density level between RBs, and iii) a second number of symbols per slot.

In some examples, the configuration for the second RE pattern for the second type of RS for the at least one second antenna port indicates: iv) information related to at least one symbol position for the second RE pattern.

In some examples, for the first PDSCH that is transmitted to the network entity, the at least one first antenna port for the first type of RS in the first PDSCH is configured with the first RE pattern and at least one second antenna port for the second type of RS in the first PDSCH is configured with the second RE pattern.

In some examples, at least one of the following: the first type of RS and the second type of RS are different, or the first type of RS and the second type of RS are the same type of RS.

In some examples, at least one of the following: the first RE pattern and the second RE pattern are different, or the first RE pattern and the second RE pattern are the same RE pattern.

In some examples, at least one of the following: based on the i) the first number of REs for each antenna port per RB, the REs in an RB configured with at least one of the first type of RS, are uniformly distributed throughout the REs of the RB, or based on the i) the second number of REs for each antenna port per RB, the REs in an RB configured with at least one of the second type of RS, are uniformly distributed throughout the REs of the RB.

In some examples, at least one of: the second number of REs is at least one and fewer than all of the REs in the RB, or the second number of symbols is at least one and fewer than all of the symbols in a slot.

In some examples, the configuration for the second RE pattern for the second type of RS for the at least one second antenna port indicates at least one of the following: v) a hopping in frequency, or vi) a hopping in time, between RBs across a scheduled bandwidth of the first PDSCH.

In some examples, the at least one first antenna port for the first type of RS that is configured with the first number of REs and the at least one second antenna port for the second type of RS that is configured with the second number of REs are configured with REs in different symbols of a slot of the first PDSCH.

In some examples, there are a plurality of RBs across a bandwidth of the first PDSCH, and wherein the at least one second antenna port for the second type of RS is configured with the second number of REs in at least every second RB of the plurality of RBs across the bandwidth of the first PDSCH, based on ii) the second density level between RBs.

In some examples, the configuration indicates: the first RE pattern for the first type of RS for at least one first antenna port, and an additional RE pattern for the first type of RS for the at least one first antenna port.

In some examples, the first type of RS is one of: a demodulation reference signal, DMRS, or a phase-tracking reference signal, PTRS.

In some examples, the second type of RS is one of: a DMRS, or a PTRS.

In some examples, the configuration related to reference signals is received from the network entity.

According to a twenty-first aspect, there is provided an apparatus comprising at least one processor, and at least one memory storing instructions that, when executed by the at least one processor, cause the apparatus to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving a first physical channel, wherein at least one first antenna port for a first type of RS is configured with the first number of resource elements, REs, in a resource block, RB, of the first physical channel; based on the configuration related to RSs and the first physical channel, determining first channel estimates associated with the first type of RS for the at least one first antenna port; performing frequency domain interpolation using linear interpolation filtering for the first channel estimates associated with the at least one first antenna port; performing time domain interpolation using linear interpolation filtering between symbols of the first type of RS for the at least one first antenna port; and determining a channel estimation using two-dimensional linear interpolation filtering based on the frequency domain interpolation and the time domain interpolation, in order to demodulate the first physical channel.

According to a twenty-second aspect, there is provided an apparatus comprising means for: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving a first physical channel, wherein at least one first antenna port for a first type of RS is configured with the first number of resource elements, REs, in a resource block, RB, of the first physical channel; based on the configuration related to RSs and the first physical channel, determining first channel estimates associated with the first type of RS for the at least one first antenna port; performing frequency domain interpolation using linear interpolation filtering for the first channel estimates associated with the at least one first antenna port; performing time domain interpolation using linear interpolation filtering between symbols of the first type of RS for the at least one first antenna port; and determining a channel estimation using two-dimensional linear interpolation filtering based on the frequency domain interpolation and the time domain interpolation, in order to demodulate the first physical channel.

According to a twenty-third aspect, there is provided an apparatus comprising: circuitry configured to perform: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving a first physical channel, wherein at least one first antenna port for a first type of RS is configured with the first number of resource elements, REs, in a resource block, RB, of the first physical channel; based on the configuration related to RSs and the first physical channel, determining first channel estimates associated with the first type of RS for the at least one first antenna port; performing frequency domain interpolation using linear interpolation filtering for the first channel estimates associated with the at least one first antenna port; performing time domain interpolation using linear interpolation filtering between symbols of the first type of RS for the at least one first antenna port; and determining a channel estimation using two-dimensional linear interpolation filtering based on the frequency domain interpolation and the time domain interpolation, in order to demodulate the first physical channel.

According to a twenty-fourth aspect, there is provided a method performed by an apparatus, comprising: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving a first physical channel, wherein at least one first antenna port for a first type of RS is configured with the first number of resource elements, REs, in a resource block, RB, of the first physical channel; based on the configuration related to RSs and the first physical channel, determining first channel estimates associated with the first type of RS for the at least one first antenna port; performing frequency domain interpolation using linear interpolation filtering for the first channel estimates associated with the at least one first antenna port; performing time domain interpolation using linear interpolation filtering between symbols of the first type of RS for the at least one first antenna port; and determining a channel estimation using two-dimensional linear interpolation filtering based on the frequency domain interpolation and the time domain interpolation, in order to demodulate the first physical channel.

According to a twenty-fifth aspect, there is provided a computer program comprising instructions, which when executed by an apparatus, cause the apparatus to perform at least the following: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving a first physical channel, wherein at least one first antenna port for a first type of RS is configured with the first number of resource elements, REs, in a resource block, RB, of the first physical channel; based on the configuration related to RSs and the first physical channel, determining first channel estimates associated with the first type of RS for the at least one first antenna port; performing frequency domain interpolation using linear interpolation filtering for the first channel estimates associated with the at least one first antenna port; performing time domain interpolation using linear interpolation filtering between symbols of the first type of RS for the at least one first antenna port; and determining a channel estimation using two-dimensional linear interpolation filtering based on the frequency domain interpolation and the time domain interpolation, in order to demodulate the first physical channel.

The following are applicable to each (e.g., one or more, including all) of the above twenty-first to twenty-fifth aspects.

In some examples, the first number of REs is at least one and fewer than all of the REs of a symbol in the RB.

In some examples, the determining of the first channel estimates associated with the first type of RS comprises: utilising a least square-based channel estimator between samples associated with the first physical channel that has been received and a known sequence.

In some examples, at least one second antenna port for a second type of RS is configured with a second number of resource elements, REs, in a resource block, RB, of the first physical channel, wherein the second number of REs is at least one and fewer than all of the REs of a symbol in the RB.

In some examples, apparatus is further caused to perform: based on the configuration related to RSs and the first physical channel, determining second channel estimates associated with the second type of RS for the at least one second antenna port.

In some examples, the determining of the second channel estimates associated with the second type of RS comprises: utilising a least square-based channel estimator between second samples associated with the first physical channel that has been received and a second known sequence.

In some examples, the second known sequence is associated with time locations and frequency locations for a demodulation reference signal, DMRS.

In some examples, the determining of the channel estimation using two-dimensional linear interpolation filtering comprises: determining a joint channel estimation based on the first channel estimates for the first type of RS and the second channel estimates for the second type of RS using a two-dimensional linear interpolation filtering.

In some examples, the determining of the second channel estimates associated with the second type of RS comprises: applying orthogonal cover code, OCC, to the second known sequence before the determining of the second channel estimates associated with the second type of RS; determining a mean value of the second channel estimates associated with the second type of RS over a length of the OCC.

In some examples, at least one of the following: the linear interpolation filtering comprises Wiener filtering, or the two-dimensional linear interpolation filtering comprises two-dimensional Wiener filtering.

In some examples, the Wiener filtering comprises interpolating for at least one of: each antenna port, each receive antenna, or each symbol, separately.

In some examples, the configuration related to RSs comprises at least one of the following: information about positioning in time for RS, information about RS per antenna port.

In some examples, the first type of RS is one of: an RS related to PTRS, or an RS related to DMRS.

In some examples, the second type of RS is one of: a front loaded DMRS, an RS related to PTRS, or an RS related to DMRS.

In some examples, the first physical channel comprises one of: a physical uplink shared channel, or a physical downlink shared channel.

In some examples, the apparatus is one of: a user equipment, and a network entity.

A computer product stored on a medium may cause an apparatus to perform the methods as described herein.

A non-transitory computer readable medium comprising program instructions, that, when executed by an apparatus, cause the apparatus to perform the methods as described herein.

An electronic device may comprise apparatus as described herein.

Various other aspects and further embodiments are also described in the following detailed description and in the attached claims.

According to some aspects, there is provided the subject matter of the independent claims. Some further aspects are defined in the dependent claims. The embodiments that do not fall under the scope of the claims are to be interpreted as examples useful for understanding the disclosure.

List of Abbreviations:

| | |
|---|---|
| AN: | Access Network |
| BM: | Beam management |
| BS: | Base Station |
| CN: | Core Network |
| DL: | Downlink |
| DMRS: | Demodulation reference signal |
| eNB: | eNodeB |
| gNB: | gNodeB |
| LTE: | Long Term Evolution |
| MAC: | Medium access control |
| NG-RAN: | Next Generation Radio Access Network |
| NF: | Network Function |
| NR: | New Radio |
| NW: | Network |
| PLMN: | Public Land Mobile Network |
| PTRS: | Phase tracking reference signal |
| PDCCH: | Physical Downlink Control Channel |
| PDSCH: | Physical Downlink Shared Channel |
| PUCCH: | Physical Uplink Control Channel |
| PUSCH: | Physical Uplink Shared Channel |
| RAN: | Radio Access Network |
| RF: | Radio Frequency |
| RRC: | Radio resource control |
| RS: | Reference signal |
| SR: | Scheduling request |
| UE: | User Equipment |
| UL: | Uplink |
| 3GPP: | 3rd Generation Partnership Project |
| 5G: | 5th Generation |
| 5GC: | 5G Core network |
| 5G-AN: | 5G Radio Access Network |
| 5GS: | 5G System |

BRIEF DESCRIPTION OF DRAWINGS

Some examples will now be described, by way of illustrative and non-limiting example only, with reference to the accompanying drawings in which:

FIG. 1 shows a schematic representation of a 5G communication system;

FIG. 2 shows a schematic representation of an apparatus for the 5G communication system of FIG. 1;

FIG. 3 shows a schematic representation of a communication device;

FIG. 4 shows a schematic representation of a resource element pattern allocation, for DMRS type-1, for one PRB with 1 FL + 3 additional DMRS symbols;

FIG. 5 shows a schematic representation of two physical resource blocks with a first RE pattern for reference signals;

FIG. 6 shows a schematic representation of two physical resource blocks with a second RE pattern for reference signals;

FIG. 7 shows an example signalling and operations diagram between a user equipment and a base station for an uplink PUSCH transmission;

FIG. 8 shows a schematic representation of a PUSCH transmission based on a first RE pattern for reference signals;

FIG. 9 shows a schematic representation of a PUSCH transmission based on a second RE pattern for reference signals;

FIG. 10 shows a schematic representation of a PUSCH transmission based on a third RE pattern for reference signals;

FIG. 11 shows a schematic representation of a PUSCH transmission based on a fourth RE pattern for reference signals;

FIG. 12 shows a schematic representation of a PUSCH transmission based on a fifth RE pattern for reference signals;

FIG. 13 shows a schematic representation of a PUSCH transmission based on a sixth RE pattern for reference signals with frequency hopping;

FIG. 14 shows a schematic representation of a PUSCH transmission based on a seventh RE pattern for reference signals with frequency hopping;

FIG. 15 shows a schematic representation of a PUSCH transmission based on an eighth RE pattern for reference signals with frequency hopping;

FIG. 16 shows an example method flow diagram performed by an apparatus;

FIG. 17 shows another example method flow diagram performed by an apparatus;

FIG. 18 shows another example method flow diagram performed by an apparatus;

FIG. 19 shows another example method flow diagram performed by an apparatus;

FIG. 20 shows another example method flow diagram performed by an apparatus; and

FIG. 21 shows a schematic representation of an apparatus.

DETAILED DESCRIPTION

Reference signals play an important role in many communication systems, such as in 5G systems. Reference signals (RSs) are predefined signals that may occupy specific resource elements (REs) within a time-frequency grid. RSs may be used for a number of different reasons, such as for channel estimation, or for tracking time/frequency. In 5G systems, in order to increase protocol efficiency, and to keep transmissions contained within a slot/beam there are defined a plurality of different types of RSs, including a demodulation reference signal (DMRS), a phase tracking reference signal (PTRS), a sounding reference signal (SRS), and a non-zero power channel state information reference signal (NZP-CSI-RS).

DMRS is used by a receiver for radio channel estimation and for demodulation of an associated physical channel. DMRS design and mapping is specific to each downlink and uplink channel in 5G, such as physical downlink control channel (PDCCH), physical downlink shared channel (PDSCH), physical uplink shared channel (PUSCH), and physical uplink control channel (PUCCH). DMRS is UE-specific and is transmitted on demand. DMRS may be beamformed/precoded and kept within a scheduled resource. Multiple orthogonal DMRS antenna ports can be allocated in frequency and time domains to support multiple input multiple output (MIMO). transmission.

The phase noise of a transmitter and/or receiver increases as the carrier frequency of a system increases. PTRSs can be utilised, particularly at high frequencies, to minimize the effect of the oscillator phase noise on system performance. One of the problems that phase noise introduces into an orthogonal frequency division multiplex (OFDM) signal appears as a common phase rotation of all the sub-carriers, known as common phase error (CPE). In larger carrier frequencies, sub-carrier specific phase rotation may also be a problem, which is known as inter-carrier interference (ICI). However, may be addressed with a selection of larger subcarrier spacing. A PTRS may be used to track the phase of a local oscillator (LO) at the transmitter and/or the receiver. PTRS can be present in uplink (e.g., PUSCH) and/or downlink (e.g., PDSCH) channels subject to a capability of UE. Due to phase noise properties, PTRS may be configured with different physical resource block (PRB) densities in frequency domain, e.g., every $2^{nd}$ or $4^{th}$ PRB, and different symbol densities in time domain. PTRS may be associated with one DMRS (antenna) port during transmission.

In uplink, a user equipment (UE) may be configured with PUSCH DMRS to enable channel estimation up to 8 antenna ports (APs) for the demodulation of PUSCH in the presence of low and high UE mobilities. 3GPP Rel-18 DMRS provides support up to 24 APs for uplink/downlink multi-user MIMO operation. Current 5G (NR) 3GPP physical layer specification provides support for a multi-antenna PUSCH transmission and reception in presence of low and high mobility by enabling the UE to be configured with one or more DMRS symbols in time within a slot, e.g. up to four symbols. Current 5G (NR) 3GPP physical layer specification enables a UE to be configured also with UL PTRS as a part of a DMRS configuration at high carrier frequencies, e.g. frequency range (FR2). In current specifications, PTRS is defined to be used only for phase-tracking and compensation (i.e., not for demodulation purposes).

Phase noise may be less prevalent at lower carrier frequencies. Typically, the PTRS has been configured to enable estimation and compensation of phase noise introduced by a non-ideal frequency oscillator at the UE and/or gNodeB (gNB) sides, especially, at high carrier frequencies, e.g., FR2. Furthermore, the PTRS may also be configured to estimate and compensate frequency offset introduced by non-ideal oscillators at the UE and/or the gNB sides or Doppler frequency offset generated by the mobility of the UE. The time density of NR PTRS may be configured to appear in in every symbol or every $2^{nd}$ or every $4^{th}$ symbol of a slot (e.g., 14 OFDM symbols), subject to a scheduled modulation and coding scheme (MCS) for PUSCH or PDSCH. Regarding to frequency domain density, the NR PTRS may be configured to be in every $2^{nd}$ or $4^{th}$ PRB or not all, subject to scheduled PUSCH/PDSCH bandwidth.

The more REs in a physical resource block (PRB) that are used to carry RSs, the greater the RS overhead. When the resource overhead for RS is greater, this means that there are fewer available resources for data and fewer opportunities for multiplexing data/control/any other signals associated with UE or other UEs. Table 1 shows an example of type 1 (type-1), type 2 (type-2), enhanced type 1 (e-type-1), and enhanced type 2 (e-type-2) DMRS resource element overheads in the time-domain compared to PUSCH allocation. The overhead comparison is with respect to 11 symbols per slot when all DL DMRS antenna ports are configured for a UE. Front loaded (FL) DMRS is a DMRS pattern that is designed to support scenarios where multiple DMRS symbols are not needed (e.g., when there is low UE mobility). FL DMRS can also be combined with one or more additional symbols to support higher ranks (e.g. >4 type-1 or >5 type-2 or 8> e-type1 or 12> e-type2). According to current specifications, a maximum number of DMRS symbols per slot is 4. For example, there could be up to 2 pairs of double DMRS symbols (i.e., 2 pairs of 1 FL + 1 additional DMRS), or 1FL +3 additional DMRS symbols with a slot. In FL DMRS, the first (available) physical channel symbol is used for DMRS, i.e., front loaded. This reduces latency as a UE is able to start channel estimation as soon as the first symbol is received. In Table 1, 1 FL means that 1 symbol is used for FL DMRS, 1 FL + 1 means that an additional symbol is used (compared to 1 FL), and so on.

Table 1: An example that shows how the RS overhead increases in a slot with 11 available symbols.

| DMRS resource overhead in time (%) over 11 symbols | | | |
|---|---|---|---|
| 1 FL | 1 FL + 1 | 1 FL + 2 | 1 FL + 3 |
| 9.1 | 18.2 | 27.3 | 36.4 |

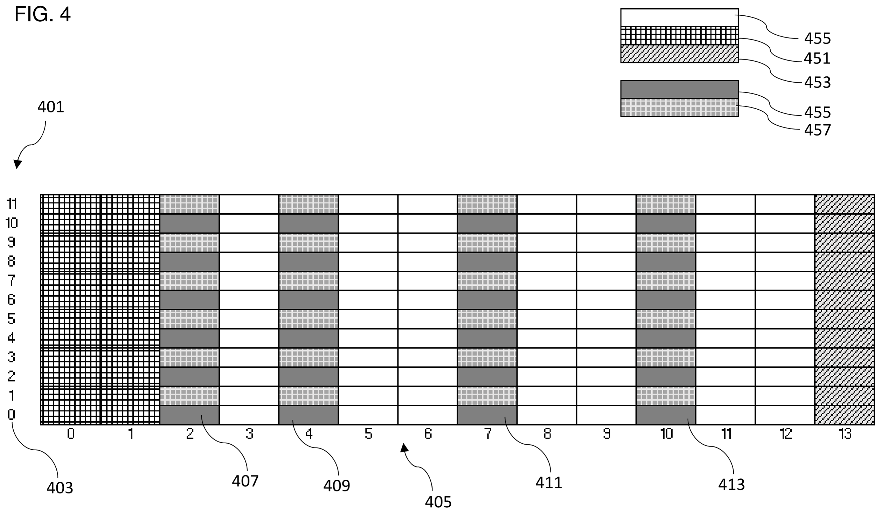

FIG. 4 shows a schematic representation of a resource element pattern allocation, for DMRS type-1, for one PRB/RB allocation over one slot with 1 FL + 3 additional DMRS symbols. An allocation of one PRB/RB 401 comprises 12 REs 405 across 14 OFDM symbols 403, in this example. In symbols 0 and 1 is a PDCCH 451. In symbol 2 of the slot, there is a FL DMRS 407. In symbol 4, there is a first additional DMRS 409. In symbol 7, there is a second additional DMRS 411. In symbol 10, there is a third additional DMRS 413. The FL DMRS 407, first additional DMRS 409, second additional DMRS 411, and third additional DMRS 413 are in all REs of the respective symbol (i.e., across the whole bandwidth of the PRB 401). In symbol 13 there is a PUCCH 453. In FIG. 4, the white/blank REs represent resources available for PUSCH 455 (i.e., between symbols 2-12). As depicted in FIG. 4, with 1 FL + 3 DMRS, 4 out of 11 available symbols in the slot are used for RS. In this manner, a large percentage of the available REs are used for RSs. In this example, for the symbols that are configured with DMRS, alternate REs per symbol are associated with different antenna ports (APs). UL DMRS for a first AP (AP1) and a second AP (AP2) 457 are located in even labelled REs 403. UL DMRS for AP3 and AP4 459 are located in odd labelled REs 403.

5G provides support for different sub-carrier spacing options, e.g., 15, 30, 60, 120 kHz (and even higher for >52.6GHz). These sub-carrier spacing options may be applied in a 6G system in order to reduce the performance degradation of PUSCH demodulation with high mobility conditions at the gNB. For example, instead of using 15 or 30 kHz sub-carrier spacing, 60 kHz sub-carrier spacing may be applied for increasing the robustness of PUSCH demodulation. However, applying high subcarrier spacing may introduce demodulation performance issues in the presence of non-line of sight (NLoS) of channels. Therefore, it is preferable to seek for alternative solutions, such as RS-based solutions, which allow flexibility to use different sub-carrier options independent of specific deployment scenario. However, as identified above, when using an RS-based solution, this decreases the amount of available resources for data (due an increased RS overhead). This may be particularly problematic in scenarios with high mobility in frequency and time domain.

One or more of the following examples aim to address one or more of the problems that have been identified above.

In examples, there is a method performed by a user equipment comprising: obtaining a configuration related to reference signals , wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

In examples, there is a method performed by a user equipment comprising: obtaining a configuration related to reference signals , wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving, from a network entity, a first physical downlink shared channel, PDSCH, wherein the at least one first antenna port for the first type of RS is configured with the first RE pattern in the first PDSCH; and demodulating the first PDSCH based on the configuration.

In examples, there is a method performed by a user equipment comprising: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; receiving a first physical channel, wherein at least one first antenna port for a first type of RS is configured with the first number of resource elements, REs, in a resource block, RB, of the first physical channel; based on the configuration related to RSs and the first physical channel, determining first channel estimates associated with the first type of RS for the at least one first antenna port; performing frequency domain interpolation using linear interpolation filtering for the first channel estimates associated with the at least one first antenna port; performing time domain interpolation using linear interpolation filtering between symbols of the first type of RS for the at least one first antenna port; and determining a channel estimation using two-dimensional linear interpolation filtering based on the frequency domain interpolation and the time domain interpolation, in order to demodulate the first physical channel.

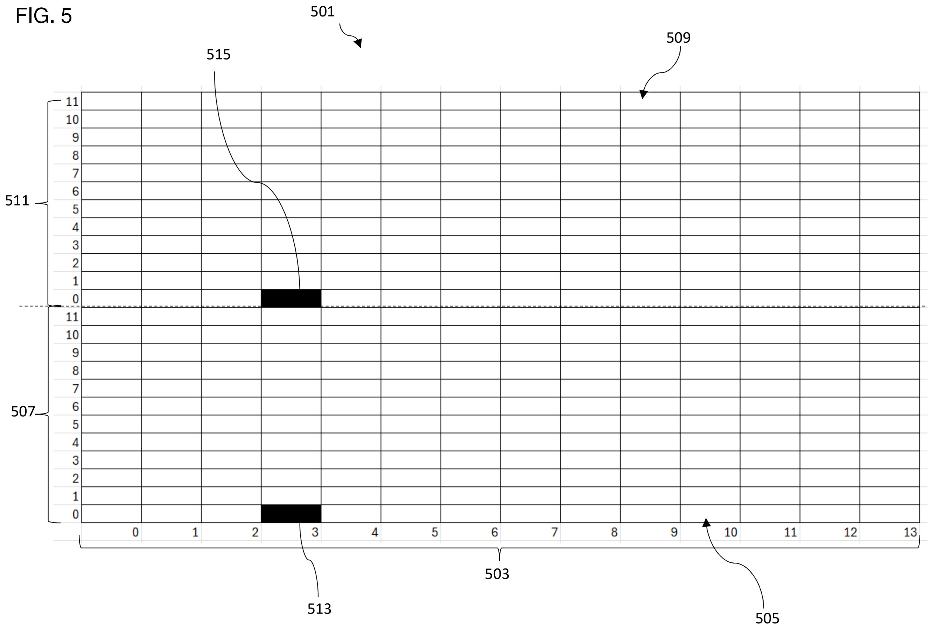

These examples will be described in more detail below, alongside FIGS. 5 to 21.

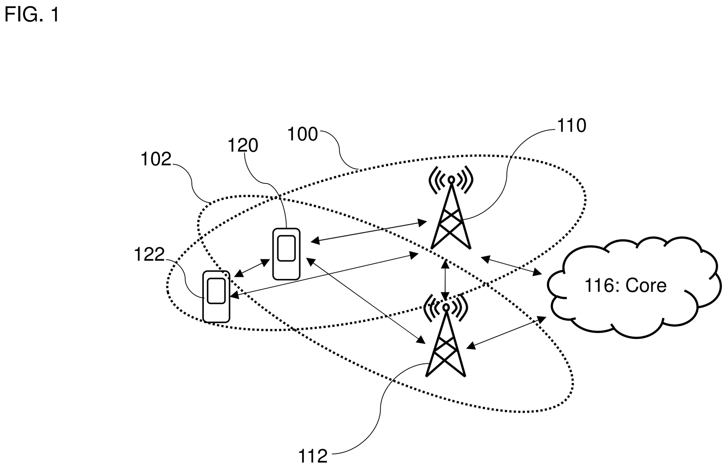

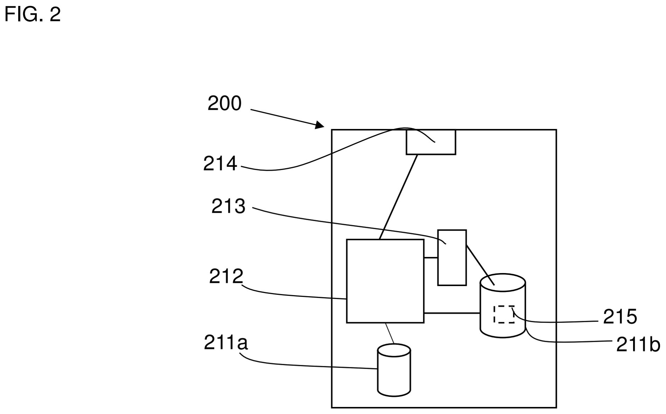

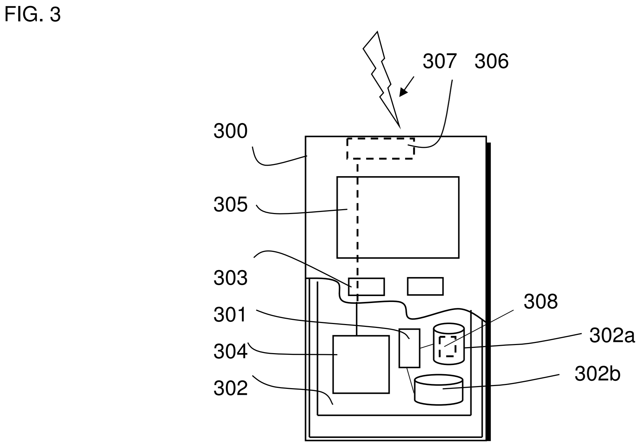

Before explaining the examples above in greater detail, an example communication device (as shown in FIG. 3) that is capable of transmitting and receiving physical channels is described. The communication device is part of a communication system (as shown in FIG. 1). The communication device is able to communicate with one or more of the entities of the communication system (as shown in FIG. 1) via an apparatus (as shown in FIG. 2), which may be part of/comprised in a base station. As described above, a base station and communication device may communicate with each other through the transmission and receptions of physical channels, e.g., PDSCH or PUSCH.

Certain general aspects of the communication system and the communication device are briefly explained with reference to FIGS. 1 to 3 to assist in understanding the technology underlying the described examples.

FIG. 1 shows a schematic representation of a 5G communication system 100. In this manner, FIG. 1 illustrates an example of a communication network to which examples disclosed herein may be applied. The communication network or a cellular communication network may comprise a network node 110 providing one or more cells, such as cell 100, and a network node 112 providing one or more other cells, such as cell 102. Each cell may be, e.g., a macro cell, a micro cell, femto, or a pico cell, for example. The cell may define a coverage area or a service area of the corresponding access node.

The network node 110 may provide a user equipment (UE) 120 (one or more UEs) with wireless access to the communication network. The wireless access may comprise downlink (DL) communication from the network node to the UE 120 and uplink (UL) communication from the UE 120 to the network node. Examples of uplink channels comprise physical uplink control channel (PUCCH) for transmitting control information and physical uplink shared channel (PUSCH) for transmitting data towards the network. Examples of downlink channels comprise physical downlink control channel (PDCCH) for transmitting control information and physical downlink shared channel (PDSCH) for transmitting data towards the user equipment.

There may be a plurality of UEs 120, 122 in the system. Each of them may be served by the same or by different network nodes 110, 112. UE may be configured with dual connectivity (DC), wherein the UE, e.g. UE 120, may be connected to multiple network nodes 110, 112. The UEs 120, 122 may communicate with each other, in case device-to-device (D2D) communication interface is established between them via a so-called sidelink (SL). Such D2D communications may be referred to as machine-to-machine, peer-to-peer (P2P) communications, or vehicle-to-vehicle (V2V), for example.

In the case of multiple network nodes in the communication network, the network nodes may be connected to each other via an interface. LTE specifications call such an interface as X2 interface. An interface between an LTE node and a 5G node, or between two 5G nodes may be called Xn interface.

The network nodes 110 and 112 may be further connected via another interface to a core network 116 of the communication network. The LTE specifications specify the core network as an evolved packet core (EPC), and the core network may comprise e.g. a mobility management entity (MME) and a gateway node. The MME may handle mobility of terminal devices in a tracking area encompassing a plurality of cells and handle signalling connections between the terminal devices and the core network. The gateway node may handle data routing in the core network and to/from the terminal devices. The 5G specifications specify the core network as a 5G core (5GC). The 5G core may comprise e.g. an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example.

FIG. 2 illustrates an example of an apparatus 200. The apparatus 200 may be for the 5G communication system of FIG. 1. The apparatus 200 may be for controlling a function of one or more network entities and/or network functions, such as the entities of the 5G-RAN or the 5GC as illustrated on FIG. 1. The apparatus 200 comprises at least one random access memory (RAM) 211a, at least one read only memory (ROM) 211b, at least one processor 212, 213 and an input/output interface 214. The at least one processor 212, 213 is coupled to the RAM 211a and the ROM 211b. The at least one processor 212, 213 may be configured to execute an appropriate software code 215. The software code 215 may for example allow to perform one or more steps to perform one or more of the present aspects or examples. The software code 215 may be stored in the ROM 211b. The apparatus 200 may be interconnected with another apparatus 200 controlling another entity/function of the 5G-AN or the 5GC.. In some examples, apparatus 200 may be configured to provide one or more functions of the 5G-AN or the 5GC. For example, apparatus 200 may be configured to perform at least some functionality of a particular function of the 5G-AN or the 5GC. For example, apparatus 200 may be configured to operate as a particular function of the 5G-AN or the 5GC. In alternative examples, apparatus 200 may be configured to perform at least some functionality of two or more functions of the 5G-AN and/or the 5GC. For example, apparatus 200 may be configured to operate as two or more functions of the 5G-AN and/or the 5GC. The apparatus 200 may comprise one or more circuits, or circuitry (not shown) which may be configured to perform one or more of the present aspects or examples.

FIG. 3 illustrates an example of a communication device 300. The communication device 300 may be similar to the communication device 102 illustrated in FIG. 1. The communication device 300 may be provided by any device capable of sending and receiving radio signals. Non-limiting examples of a communication device 300 are a user equipment, a terminal, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device, or a terrestrial/maritime/aerial vehicle such as a car, a truck, a boat, an air plane, or a drone, or any combinations of these or the like. The communication device 300 may provide, for example, communication of data for carrying communications. The communications may be one or more of voice, electronic mail (email), text message, multimedia, data, machine data and so on.

The communication device 300 may receive signals over an air or radio interface 307 via appropriate apparatus for receiving and may transmit signals via appropriate apparatus for transmitting radio signals. In FIG. 3, a transceiver apparatus is designated schematically by block 306. The transceiver apparatus 306 may be provided for example by means of a radio part and associated antenna arrangement. The antenna arrangement may be arranged internally or externally to the mobile device.

The communication device 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a. The communication device 300 may comprise one or more circuits, or circuitry (not shown) which may be configured to perform one or more of the present aspects or examples.

The processor, storage and other relevant control apparatus may be provided on an appropriate circuit board and/or in chipsets. This feature is denoted by reference 304. The communication device may optionally have a user interface such as keypad 305, touch sensitive screen or pad, combinations thereof or the like. Optionally one or more of a display, a speaker and a microphone may be provided depending on the type of the device.

In examples, in the UL when transmitting a PUSCH, or in the DL when receiving and processing a PDSCH, a configuration related to reference signals is utilized by a UE. Based on the configuration, a physical channel (e.g., a PUSCH or PDSCH) may be configured with at least one type of RS. An antenna port for a first type of RS is configured with a pattern for REs (herein referred to as an 'RE pattern'). For the RE pattern, at least one RE is associated with a resource block (RB) (or PRB) of resources within the physical channel. A number of RBs/PRBs associated with the RE pattern across an allocation for the physical channel is configurable (e.g., such that a density between RBs/PRBs may be flexibly reduced), e.g., every $2^{nd}$ PRB (0.5 density level), $3^{rd}$ PRB (0.33 density level), $4^{th}$ PRB (0.25 density level), $5^{th}$ PRB (0.2 density level), etc., may be configured with RSs. In this manner, the density level of RSs between PRBs may be reduced with respect to full density, i.e. every PRB is allocated with RSs. Stated differently, for a first type of RS, the density per antenna port may be significantly lower (e.g., 0.5, 0.25) with respect to current NR specification (e.g. 3 w/ type-1), and/or the RE pattern may be different with respect to NR (e.g., comb-3, comb-4). In some examples, the first type of RS may have a configurable density level in time (e.g., referred to as a 'symbol density). This may be applicable in 6G systems, as well as in 5G systems. This will be described in more detail below.

In some examples, a physical channel (e.g., PUSCH or PDSCH) comprises a first type of RS (as the only type of RS), with a configurable RE usage. The first type of RS may be associated with/related to PTRS. The first type of RS (that is related to PTRS) is herein referred to as enhanced PTRS (E-PTRS). In other examples, any other suitable name is used for E-PTRS. An antenna port of E-PTRS may be associated with an RE pattern wherein at least one RE is associated with a RB/PRB, of the physical channel resources. For NR PTRS, only one RE per PRB is allowed. For E-PTRS, the number of PRBs associated with an RE pattern for E-PTRS across an allocation for the physical channel may be flexibly configured, e.g. every PRB, every $2^{nd}$ PRB, $3^{rd}$ PRB, $4^{th}$ PRB, $5^{th}$ PRB, etc., are configured with E-PTRS. Moreover, the E-PTRS may also have a configurable symbol density in time. This will be described in more detail below.

In some examples, a physical channel (e.g., PUSCH or PDSCH) comprises a second type of RS (as the only type of RS), with a configurable RE usage. The second type of RS may be associated with/related to DMRS. The second type of RS (that is related to DMRS) is referred to as light DMRS (L-DMRS). In other examples, any other suitable name is used for L-DMRS. L-DMRS may use a reduced number of REs in the frequency domain compared to 5G specified DMRS. L-DMRS may have RE patterns with reduced PRB density in frequency. L-DMRS has flexibility to configure multiple symbols in time (e.g., more than 4 symbols). This will be described in more detail below.

It should be appreciated that "first" type of RS and "second" type of RS are used as labels only. In other examples, a first type of RS may be L-DMRS, and a second type of RS may be E-PTRS.

In some examples, a number of antenna ports for L-DMRS may be scaled up to a specified number of supported layers for a physical channel (e.g., PUSCH or PDSCH). A number of antenna ports for E-PTRS may be up to 2.

In some examples, a physical channel comprises more than one different type of RS. For example, RE patterns of antenna port(s) associated with FL DMRS and E-PTRS are configured for a set of RBs/PRBs of physical channel resources across different time symbols. The set of RBs/PRBs may be the same, or partially the same, or different, for the different types of RS. For example, FL DMRS and E-PTRS may be sharing a set of the same or partially the same or different PRBs of PUSCH/PDSCH resources across different time symbols such that E-PTRS with one or more time symbols is associated after FL DMRS transmission occasions. In another example, RE patterns of antenna port(s) associated with FL DMRS and L-DMRS are sharing a set of RBs/PRBs of physical channel resources across different time symbols. In this manner, L-DMRS with one or more time symbols is associated after an FL DMRS transmission occasion (i.e., one or more symbols after FL DMRS). The set of RBs/PRBs may be the same, or partially the same, or different. This will be described in more detail below.

In some examples, the configuration for RSs comprises an indication of an RE pattern ('RE pattern' may alternatively be referred to as a 'pattern for REs'). The indication of the RE pattern may comprise information about at least one of the following: the type of RS (or RSs), symbol location, sub-carrier location(s), PRB density, symbol density, number of REs per antenna port to be used per PRB, or antenna port density.

In some examples, based on the configuration related to reference signals, in the uplink, the UE performs rate matching of a PUSCH transport block (TB) according to RE mapping of antenna ports of the configuration for RSs, e.g. FL DMRS and E-PTRS within a PUSCH allocation. The rate-matching process may adjust a coding rate of channel coding (e.g., selecting and repeating bits of an encoded transport block (e.g. low-density parity coding (LDPC))) and puncturing excessive bits, such that encoded bits of a TB fit to resources for PUSH transmission. In this manner, the rate-matching is taking account REs configured for RSs, e.g., FL DMRS and E-PTRS. This will be described in more detail below.

In some examples, a UE receives a first indication (or other information) in downlink control information (DCI) with a PUSCH scheduling grant. The first indication may be a flag or codepoint field, e.g., the first indication may be labelled 'REs for data with RS' and be associated with a value of '1', or '0', with 1-bit. The 1-bit provides an indication of how the UE should perform rate matching when transmitting the PUSCH.

When the scheduling grant includes the availability of REs for data with RS (e.g., 'REs for data with RS= 1) defining rate matching of PUSCH transmission block according to an RE pattern for RSs (e.g., FL DMRS and E-PTRS), then the UE rate-matches a PUSCH TB based on an RE pattern used for RS transmission by adjusting a coding rate of channel coding and puncturing excessive bits such that encoded bits of a TB fit to resources of PUSCH transmission (e.g., increasing a coding rate associated with a PUSCH TB by REs not used for RS transmission (e.g., all "empty" resource elements and/or PRBs not used for RSs). When a UE is indicated with the availability of REs for data with RS and the UE has performed aforementioned rate-matching of PUSCH transport block, the UE transmits a rate-matched PUSCH TB over frequency and time resources of PUSCH that are not occupied by RS.

When a scheduling grant does not include the first indication or information related to availability of REs for data with RS, or the indication 'REs for data with RS' is set to 0, then the UE rate-matches a PUSCH TB according to the RE pattern used for the configuration, for transmission across a PUSCH allocation. When the UE is indicated with the availability of 'REs for data with RS' = 0 and the UE has performed aforementioned rate-matching of PUSCH TB, the UE transmits a rate-matched PUSCH TB over frequency and time resources of PUSCH that are not occupied by RS. Here, the UE may not be allowed to use empty REs and/or empty PRBs for the transmission of the PUSCH TB. This will be described in more detail below.

In some examples, frequency hopping is applied to the RE pattern of RSs, based on the configuration for RSs. For example, the configuration for RSs may indicate a predefined frequency hopping pattern. This will be described in more detail below.

In some examples, the UE may be configured with multiple configurations related to RSs (e.g., the configuration for RSs may comprise a plurality of different RS configurations). Each of the RS configurations may indicate an RE pattern and/or predefined RE and/or PRB densities in time and frequency. Each RS configuration may be defined e.g., according to channel properties and/or according to MCS, subcarrier spacing (SCS), or according to any other criteria. The RS configuration to be used for a certain transmission or reception may be selected via medium access control (MAC) signalling, or via DCI. This will be described in more detail below.

FIG. 5 shows a schematic representation of two physical resource blocks with a first RE pattern for reference signals.

A slot 501 comprises 14 OFDM symbols 503 (in time). A first RB/PRB 505 comprises 12 REs 507. A second RB/PRB 509 comprises 12 REs 511. The slot 501 may carry at least one physical channel, e.g., PUSCH in the UL, or PDSCH in the DL. The slot 501 may carry other physical channels such as physical control channels.

In the first PRB 505 there is a first RS 513 with one or more antenna ports, which is indicated with a black box 513. The first RS 513 is carried in symbol 3, RE 0, of the first PRB 505. In this manner, there is a single RS comprised in the first PRB 505. In the second PRB 509 there is a second RS 515 with one or more antenna ports. The second RS 515 is carried in symbol 3, RE 0, of the second PRB 509. The first RS 513 and the second RS 515 may be the same type of RS. In other examples, the first RS 513 and the second RS 515 may be different types of RS. The first 513 and second RSs 515 may be configured with the same or different density levels between PRBs, e.g. every PRB, every 2nd PRB, every 3rd PRB, etc. In this example, the density level between PRBs is every PRB (i.e., the same number of RS in each PRB).

In other examples, in the first PRB 505 and second PRB 509 there is the first RS 513 or the second RS 515 with one or more antenna ports. The first RS 513 or second RS 515 may be carried in symbol 3, RE 0, of the first PRB 505 and second PRB 509. In this manner, there is a single RS comprised in the first PRB 505 and the second PRB 509. The first RS 513 or second RS 515 may be the same type of RS. The first RS 513 or the second RS 515 may also be configured with different PRB-level density, e.g., every PRB, every 2nd PRB, every 3rd PRB, etc. The first or second RS may also be configured with different number of symbols and related time domain densities.

In FIG. 5, the first RS 513 with one or more antenna ports is configured with a first number of REs in the first PRB 505 of the slot 501, wherein the first number of REs is 1 in this example. In other examples, the first number is at least one and fewer than all (i.e., between 1 and 11 inclusive) of the REs of symbol 3 (or any other symbol in the slot) in the first PRB 505. Compared to the RS pattern of FIG. 4, the example of FIG. 5 has a reduced RS overhead. The first RS 513 may also be configured with different PRB-level density, e.g. every PRB, 2nd PRB, every 3rd PRB, etc., leading to a further reduction, at PRB level, for RS overhead.

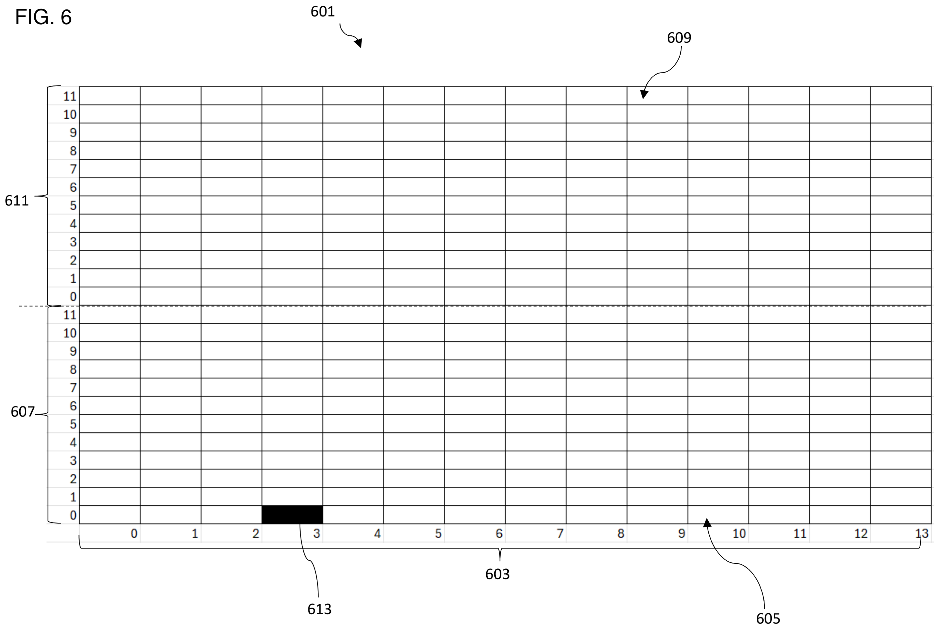

Even though FIG. 5 shows only two PRBs, the bandwidth of the physical channel may be greater than 24 REs (i.e., 24 sub-carriers) in other examples. In other examples, the bandwidth of the physical channel is 12 REs. In the example of FIG. 5, the RE pattern is such that each PRB of the physical channel comprises an RS. The RE pattern is the same in each PRB across the bandwidth of the physical channel. A density level (of RSs) between PRBs may be configured to be lower than depicted in FIG. 5. This is depicted in FIG. 6. The RS pattern of FIG. 5 may be considered to have a density level between PRBs of 1 (i.e., the same RS pattern is configured for each PRB across the BW of the physical channel. The number of symbols and related symbol densities may also be configured.

It should be understood that the number of REs per one or more antenna ports and the density of symbols and the number of symbols are given as an example only. In other examples, the numbers may be higher or lower than shown in the example of FIG. 5.

FIG. 6 shows a schematic representation of two physical resource blocks with a second RE pattern for reference signals.

A slot 601 comprises 14 OFDM symbols 603 (in time). A first RB/PRB 605 comprises 12 REs 607. A second RB/PRB 609 comprises 12 REs 611. The slot 601 may carry at least one physical channel, e.g., PUSCH in the UL, or PDSCH in the DL. The slot 601 may carry other physical channels such as physical control channels.

In the first PRB 605 there is a first RS 613 with one or more antenna ports, which is indicated with a black box. The first RS 613 with one or more antenna ports is carried in symbol 3, RE 0, of the first PRB 605. In this manner, there is a single RS comprised in the first PRB 605. In the second PRB 509 there are no RSs.

The first RS 613 with one or more antenna ports is configured with a first number of REs in the first PRB 605 of the slot 601, wherein the first number of REs is 1 in this example. In other examples, the first number is at least one and fewer than all (i.e., between 1 and 11 inclusive) of the REs of symbol 3 (or any other symbol in the slot) in the first PRB 605. Compared to the RS pattern of FIG. 4 and FIG. 5, the example of FIG. 6 has a reduced RS overhead.

Even though FIG. 6 shows only two PRBs, in other examples the bandwidth of the physical channel is greater or smaller than 24 REs (i.e., 24 sub-carriers). In this manner, the RE pattern for RSs with one or more antenna ports is such that every other (i.e., every second) PRB of the physical channel comprises an RS. The RE pattern is the same in every second PRB across the bandwidth of the physical channel. In some examples, the RS pattern may repeat every 4th, 8th, etc., PRB. The RE pattern of FIG. 6 may be considered to have a density level between PRBs of 0.5. The density level between PRBs in FIG.6 is half than the density level between PRBs in FIG. 5.

It should be understood that the number of REs and symbols and related densities are given as an example only. In other examples, the numbers may be higher or lower than shown in the example of FIG. 6.

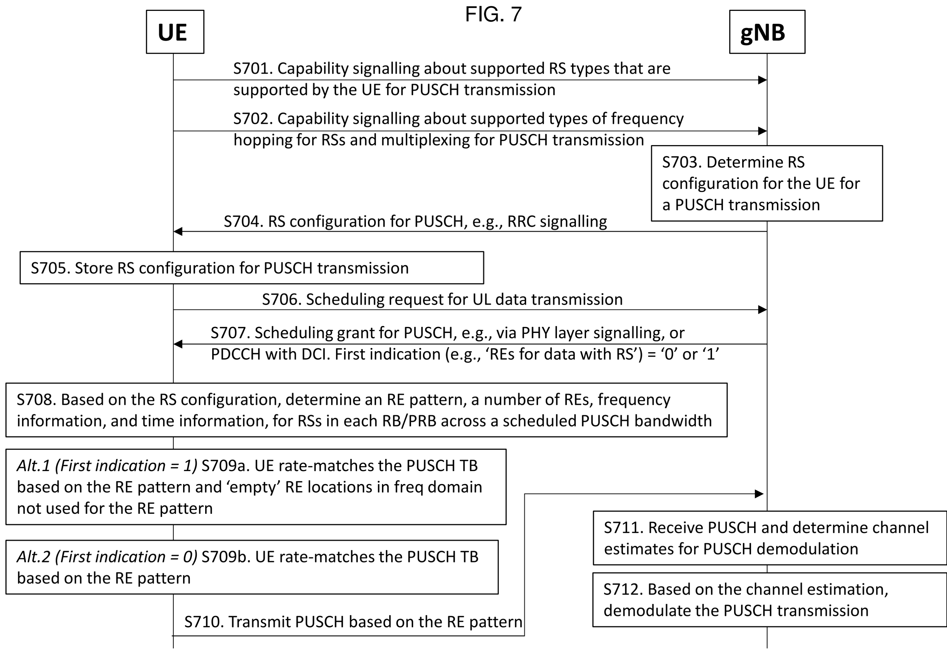

FIG. 7 shows an example signalling and operations diagram between a user equipment and a base station for an uplink PUSCH transmission. FIG. 7 is related to the uplink (e.g., a PUSCH transmission from the UE to the base station). It should be understood that the signalling and operations are equally applicable to the downlink (e.g., a PDSCH transmission from the base station to the UE).

At S701, the UE transmits (or sends), to the network entity (e.g., base station, gNB), an indication of types of RS that are supported by the UE for a PUSCH transmission. The UE may also transmit an indication of types of RS patterns that are supported by the UE.

In some examples, the UE indicates via capability signaling (e.g. RRC or MAC level signaling) which RS types are supported for PUSCH transmission (e.g., a 6G transmission). For example, at least one of the following information is indicated about the type of RS patterns that are supported: E-PTRS (e.g., whereby E-PTRS supports more than one resource element per antenna port for PRB per frequency density with configurable PRB density in frequency and symbol density in time), E-PTRS + E-PTRS combination, L-DMRS (e.g., DMRS with reduced PRB density in frequency with enhanced (e.g., more than four in total) flexibility to configure multiple symbols in time), L-DMRS + L-DMRS combination, E-PTRS + L-DMRS (or vice versa) combination, FL DMRS + E-PTRS combination, FL DMRS + L-DMRS combination, single L-DMRS, or single E-PTRS (whereby 'single' refers to one symbol being configured).

At S702, the UE transmits, to the gNB, an indication of types of frequency hopping for RSs that the UE supports and/or information about multiplexing, for a PUSCH transmission.

In some examples, the UE indicates via capability signaling (e.g. RRC or MAC level signaling) which types of frequency hopping for reference signals and/or options for multiplexing is supported at the UE. In some examples, at least one of the following pieces of information is indicated: a type of (frequency) hopping type (herein referred to as 'hopping type') (e.g., an indication as to whether the UE supports frequency domain hopping of RS within a PUSCH allocation inside of an active bandwidth part (BWP), or an information element related to multiplexing (e.g., an indication as to whether the UE supports multiplexing of RS with at least one of the following, into a same OFDM symbol: another data channel (e.g., PUSCH), control channel (e.g., PUCCH), a signal (e.g., physical random access channel preamble), or RS (e.g., sounding RS). For example, when the UE indicates a support for multiplexing between PUSCH and PUCCH, this means that the UE is able to multiplex RS according to an RS configuration (discussed in more detail below in S703), with PUSCH and PUCCH.

A parameter associated with the hopping type (e.g., a higher layer parameter), which may be transmitted by the UE the to the gNB, may have one of the following values: hopping type = 'fractional' or 'part' (e.g., frequency hopping RS is transmitted with multiple hops over a fraction of a PUSCH bandwidth), hopping type = 'full' (e.g., frequency hopping RS is transmitted with multiple hops in a full portion of PUSCH bandwidth, or hopping type = 'none' (e.g., frequency hopping RS is not supported). In this context, 'fractional' means that only part of the frequency resources of a bandwidth are used, rather than all sub-bands as in typical hopping. In other examples, when hopping type = 'none', this means that frequency hopping is configured such that RS(s) and antenna port(s) is/are transmitted in one OFDM symbols (1 hop). For a PUSCH transmission, there may not be hopping in frequency domain but only RS transmission performs hopping in frequency domain.

In this context, frequency hopping may refer to a situation whereby PUSCH and DMRS transmissions (as such) do not perform any frequency hopping (e.g., PUSCH is not configured with intra-slot or inter-slot frequency hopping) but a same set of antenna ports (e.g., one or two) of UL E-PTRS or L-DMRS is/are transmitted in different OFDM symbol positions in different PRBs with corresponding RE allocations.

At S703, the gNB determines a configuration for RSs (herein referred to as the RS configuration) for the UE for a PUSCH transmission. The gNB may determine the RS configuration based on the information received in S701 and/or S702.

The RS configuration may indicate at least one RE pattern, wherein each RE pattern is for a type of RS for at least one antenna port. The RS configuration for each RE pattern for each type of RS for the at least one antenna port may indicate at least one of the following: a number of REs for each antenna port per RB (e.g., a frequency density for RS within an RB), a density level between RBs (e.g., a frequency density for RS between RBs), and a number of symbols per slot (e.g., a time density for RS within a slot).

At S704, the gNB transmits, to the UE, the RS configuration. The gNB may use RRC signalling to transmit the RS configuration. In other examples, the UE obtains the RS configuration (e.g., the UE is preconfigured with the RS configuration).

In some examples, the UE may be configured, e.g., via RRC and/or MAC level signaling, with the RS configuration, wherein the RS configuration indicates at least one of the following: a type of RS (or type of RS pattern), a number of antenna ports associated with each RS (or each type of RS), a total number of PRBs to comprise RSs, a type of frequency hopping, a bandwidth associated with frequency hopping, an offset for PRBs in frequency domain between two consecutive frequency hops over two different OFDM symbols, a time duration of an RS (resource) in symbols, a density of time within a time duration of an RS, or an offset for a PRB with respect to a starting PRB of a BWP.

For example, the configuration indicates an RE pattern for a first type of RS (e.g., L-DMRS, E-PTRS) for at least one antenna port, wherein the configuration for the RE pattern for the first type of RS for the at least one antenna port indicates: i) a number of REs for each antenna port per resource block, RB, ii) a density level between RBs, and iii) a number of symbols to carry the first type of RS per slot. In other examples, the RS configuration indicates further information related to the RSs.

For example, the type of RE pattern may indicate at least one of the following: single E-PTRS, single L-DMRS, E-PTRS + E-PTRS, L-DMRS + L-DMRS, L-DMRS + E-PTRS, FL DMRS + E-PTRS, FL DMRS + L-DMRS. For example, for antenna ports up to two (i.e. MIMO ranks up to two), the UE may be configured with 'FL DMRS + E-PTRS' or 'E-PTRS + E-PTRS'. For example, for antenna ports greater than two (i.e. MIMO ranks greater than two), the UE may be configured with 'FL DMRS + L-DMRS' or 'L-DMRS +L-DMRS'.

The RS configuration may indicate a number of antenna ports associated with each RS (or each type of RS). For example, when it is indicated that a number of antenna ports = 4, then the RS is configured with four different antenna ports. Here, antenna ports may be associated with MIMO rank or the number of layers transmitted with PDSCH/PUSCH.

The RS configuration may indicate a total number of PRBs to comprise RSs, 6G-LITE-RS-BW. The indicated total number of PRBs may be same as the total number of PRBs across the PUSCH/PDSCH bandwidth, or may be lower.

The hopping BW of the RS may be indicated in PRBs. For example, when the hopping BW = 10, then REs associated with RS antenna ports are mapped into 10 PRBs according to a type of RS (as per the RS configuration). When frequency hopping is not configured, the hopping BW corresponds to the whole (intended) transmission bandwidth.

In some examples, the PRB offset in frequency domain is between two consecutive frequency hops over two different OFDM symbols. This parameter (PRB offset in FD) may be configured when the type of frequency hopping is 'fractional'. For example, when fractional hopping is configured and the PRB offset in FD = 4, this means that, between two consecutive hops in time, there is a 4 PRB frequency shift.

The time duration of an RS (resource) in symbols may be referred to as a 'time span'. The time span of an RS may define a duration of time of a resource in OFDM symbols. For example, when the time span is set to 4, the RS resource is distributed over 4 symbols in a slot.

The RS configuration may comprise information related to time for the positioning of RS resources within a slot. The information related to time may comprise a density of time within a time duration of an RS, which may be referred to as 'time density'. For example, when time density is set to 2 (and time span is set to 4), the RS resource occurs in every 2nd symbol in time within a configured resource distributed over 4 symbols. In other examples, instead of a value for 'time density', the information related to time comprises symbol positions. For example, one or more symbol positions within a slot are defined, e.g., symbols 3, 6, 11. When the symbol positions are configured, the time span may not be configured.

The offset for a PRB with respect to a starting PRB of a BWP may be used by a network to assign different UEs with different RS resource allocations or RS patterns.

At S705, the UE stores the RS configuration.

At S706, the UE transmits, to the gNB, a scheduling request for an UL data transmission.

At S707, the gNB transmits, to the UE, a scheduling grant (SG) for PUSCH. The SG may be provided via physical layer signalling. In other examples, the SG is provided in PDCCH with DCI. In some examples, the gNB transmits a first indication (or other suitable information related to rate matching. The first indication may be labelled 'REs for data with RS' and may be provided in downlink control information (DCI) with the SG. The first indication may comprise a flag or codepoint field, e.g. 'REs for data with RS' = 1, or 0, with 1-bit. The first indication provides an indication of how the UE should perform rate matching when transmitting the PUSCH.

At S708, based on the RS configuration, the UE prepares a PUSCH for transmission. For example, the UE determines, for a PRB of the PUSCH: how many REs are to be configured with RSs, and the frequency and time location of each RS. In some examples, the UE determines a density between PRBs (across the PUSCH bandwidth) (e.g., RS is to be configured in every PRB, or every 3$^{rd}$ PRB, etc).

In some examples, based on the configuration, an antenna port for a first type of RS (e.g., a DMRS antenna port) is configured with a number of REs in a PRB of the PUSCH, wherein the number of REs is at least one and fewer than all of the REs of a symbol in the PRB.

The UE determines rate matching for the PUSCH based on the received scheduling grant of S707.

In a first alternative, when the SG indicates that REs for data with RS =1 (or 'YES'), then the flow proceeds to S709a.

At S709a, the UE rate-matches the PUSCH TB with the RE pattern and available "empty" REs and/or REs associated with "empty" PRBs not used for RE pattern of RS and rate-matches the PUSCH based on: the availability of 'REs for data with RS' and 'empty' RE locations in frequency domain that are not used for the RE pattern of RSs. The rate-matching process may adjust a coding rate of channel coding (e.g., selecting and repeating bits of an encoded transport block (e.g. low-density parity coding (LDPC))) and puncturing excessive bits, such that encoded bits of a TB fit to resources for PUSCH transmission. In this manner, the rate-matching is taking account REs configured for RSs, e.g., FL DMRS and E-PTRS.

In a second alternative (rather than the first alternative), when the SG indicates that REs for data with RS = 0 or no relevant information is comprised in the SG, then the flow of FIG. 7 proceeds to S709b.

At S709b, the UE rate-matches the PUSCH TB with the RE pattern for RSs

At S710, the UE performs a PUSCH transmission to the gNB.

At S711, the gNB receives the PUSCH. The gNB determines channel estimates for PUSCH demodulation based on the RS configuration (sent in S704).

At S712, based on the channel estimates, the gNB demodulates the PUSCH. For example, for a configuration for RSs with a combination of L-DMRS and E-PTRS, both the L-DMRS and E-PTRS may be utilised by the gNB for demodulation of the PUSCH.

It should be appreciated that in other examples, one or more of the steps in FIG. 7 may not be performed or may be performed in a different order.

In some examples, upon reception of the RS configuration which indicates the type of frequency hopping is 'fractional' or 'full', the UE determines a number of frequency hops and a number of symbols based on a configured hopping BW and a total number of PRBs, e.g., as follows:

$$\text{Number of hops} = \lfloor (\text{Total number of PRBs})/(\text{Hopping BW in PRBs}) \rfloor$$ . Otherwise, the UE can assume the number of hops is 1 (i.e. no hopping).

In some examples, the UE transmits PUSCH and RS (according to the RS configuration) with at least with one of the following options: by using current (NR) DMRS or PTRS symbol locations in time, by using only current (NR) DMRS (e.g., 3GPP TS 38.211, for UL sec. 6.4.1.1 and for DL sec 7.4.1.1) and PTRS symbol locations in time, or by using new symbol locations for both DMRS and the RS configuration.

In some examples, the UE transmits PUSCH and RS (according to the RS configuration) at least with one of the following options: by using current (NR) DMRS positions or by using current (NR) PTRS positions, by using new symbol locations for the RS.

In some examples, E-PTRS antenna port mapping in frequency domain with REs over one or more PRBs is defined as: antenna ports with corresponding REs may be configured into every n-th PRB, where n=1...Nmax. For a PRB with E-PTRS antenna port(s), each antenna port may be associated with one or more REs within a PRB with a parameter.

For example, the parameter may be a higher layer parameter, e.g., *E-PTRS-REs-Per-AP.* For example, when *E-PTRS-REs-Per-AP* is configured with 4, there are four REs per PRB per antenna port. An E-PTRS antenna port(s) may be multiplexed in frequency or code domain, e.g. by using orthogonal cover code (OCC) with a length of K, e.g., K=2.

In some examples, mapping for L-DMRS antenna port REs is defined over multiple PRBs as: antenna port resource element patterns that use, e.g., NR (type-1/type2, e-type1/e-type2) or DMRS antenna port RE patterns. In some examples, L-DMRS antenna ports with corresponding REs may be configured into every n-th odd or n-th even PRB over a configured RS bandwidth where n=1... Nmax, where Nmax is configured by a network. This may be referred to as a density level between PRBs, or a PRB density level. For example, the density level between PRBs may be configured with a higher layer parameter, e.g., *L-DMRS-PRBDensity.* For example, when the parameter for the density level between PRBs indicates '2nd even', then RE pattern (of RSs) is configured into each 2nd even PRB.

In some examples, upon the reception of the RS configuration which indicates the type of RS pattern as single E-PTRS, single L-DMRS, 'FL-DMRS + L-DMRS', 'FL DMRS+E-PTRS', 'L-DMRS + L-DMRS', 'E-PTRS + E-PTRS', or 'L-DMRS + E-PTRS' (also vice versa) the UE performs rate matching of a TB PUSCH transmission according to a resource element mapping of antenna ports of the RS configuration, e.g., FL DMRS + E-PTRS/L-DMRS within PUSCH allocation.

In some examples, when the type of RE pattern indicates 'FL-DMRS + L-DMRS' or 'FL-DMRS + E-PTRS' or 'L-DMRS + L-DMRS' or 'L-DMRS+ E-PTRS', there is one-to-one mapping between all antenna ports of the RS across different symbols (e.g., E-PTRS/L-DMRS and/or FL-DMRS + E-PTRS/L-DMRS). For example, when the RS type configuration indicates combination of RS type the UE applies the same transmission precoding for all antenna ports of the RS configuration as for antenna ports of PUSCH. Upon reception of the PUSCH according the RS configuration (sent by the UE), the gNB may perform a joint channel estimation for PUSCH demodulation by using all RS antenna ports associated with combination RS.

In another example, the above example may be applied to DL PDSCH and related RS reception at the UE side.

In some examples, the UE multiplexes UL RS, (e.g., according to the capability reported in S702), with other UL, control or data channel(s) into the same symbol.

In some examples, the RS configuration may indicate, for two APs: E-PTRS (4,2,1) + E-PTRS(2,2,1) or E-PTRS (4,2,1) + E-PTRS(2,1,1). The RS configuration may indicate any other combination where, for a certain number of Aps, different RE patterns for the same RS type are configured. This may be applicable for any RS type, e.g., L-DMRS, or E-PTRS.

In some examples, APs may be distributed in time (symbols). For example, 4-AP L-DMRS(12,2,1)+ 2-AP L-DMRS(6,2,1) +2-AP L-DMRS(6,2,1), where first 2-AP L-DMRS would use first 2 APs of 4-AP L-DMRS and second 2-AP L-DMRS would use the remaining 2-AP of 4-AP L-DMRS.

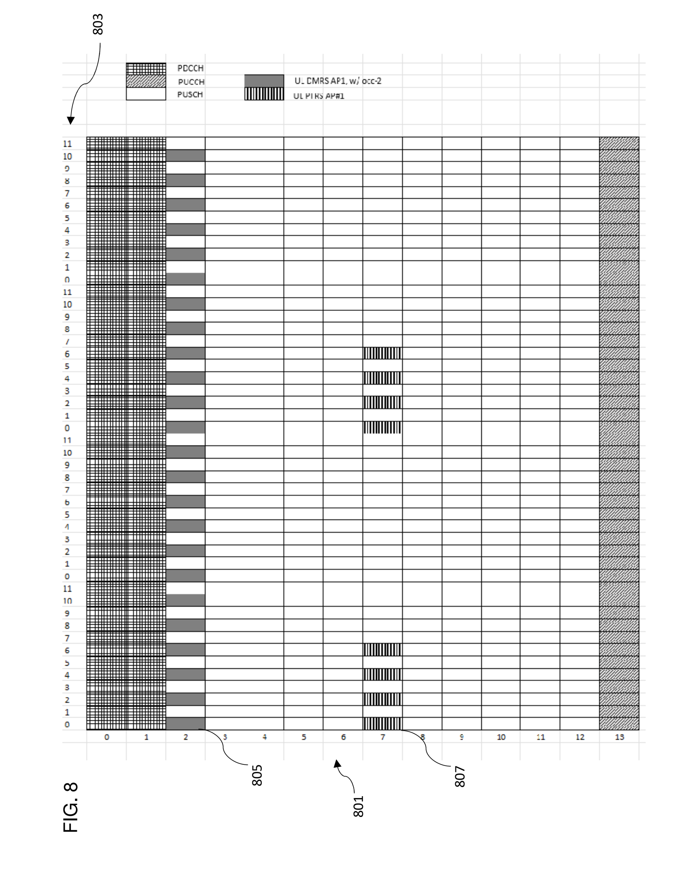

Some example configurations of physical channels will now be described. In the UL, based on an RS configuration received at the UE, the UE may transmit a PUSCH to a gNB. The PUSCH transmission is configured based on the RS configuration. It should be appreciated that the examples shown in FIGS. 8 to 15, which are applicable to the uplink, are equally applicable to the downlink (e.g., PDSCH).

FIG. 8 shows a schematic representation of a PUSCH transmission based on a first RE pattern for reference signals. There are 14 OFDM symbols 801 and 48 REs 803, wherein the REs 803 are split into 4 groups of 12 REs (i.e., 12 REs per RB/PRB).

The first RE pattern comprises FL DMRS 805 and E-PTRS 807. In the following, the notation (x,y,z) (e.g., for E-PTRS) defines that x = number of REs per antenna port per PRB, y = density level between PRBs, z = number of symbols that carry RS. In the example of FIG.8, the E-PTRS 807 is defined as (4,2,1). The x-value of '4' means that there are 4 REs per antenna port configured with an E-PTRS 807 in a PRB. The y-value of '2' means that each 2nd PRB across the BW of the PUSCH is configured with RSs (i.e., some PRBs do not carry RSs). The z-value of '1' means that 1 symbol in the PRB is configured to carry E-PTRS 807. Stated differently, one E-PTRS antenna port is configured with four REs into every second PRB across a scheduled/configured PUSCH bandwidth.

In this example, the E-PTRS 807 are carried in symbol 7. The FL DMRS 805 are carried in symbol 2. In this example, every other RE of symbol 2 is configured with a DMRS (e.g., an example of Rel-15 Type-1 or Rel1-18 e-type-1). In other examples, each RE of symbol 2 is configured with DMRS. The RS configuration may comprise information related to time that indicates symbols 2 and 7.

It should be appreciated that the number of resources and the positioning in frequency and time is shown as an example only.

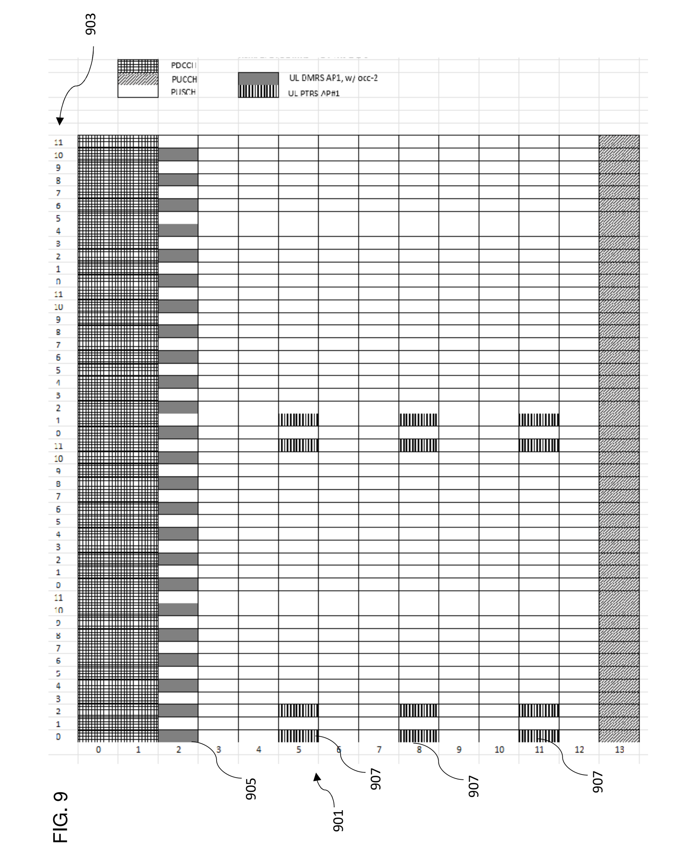

FIG. 9 shows a schematic representation of a PUSCH transmission based on a second RE pattern for reference signals. There are 14 OFDM symbols 901 and 48 REs 903, wherein the REs 903 are split into 4 groups of 12 REs (i.e., 12 REs per RB/PRB).

The second RE pattern comprises FL DMRS 905 and E-PTRS 907. In the example of FIG. 9, the E-PTRS 907 is defined as (2,2,3). The x-value of '2' means that there are 2 REs per antenna port configured with an E-PTRS 907 in a PRB. The y-value of '2' means that each 2nd PRB across the BW of the PUSCH is configured with RSs. The z-value of '3' means that 3 symbols in the PRB carry the 2 REs configured with a E-PTRS 807. Stated differently, one E-PTRS antenna port is configured with two REs into every second PRB across a scheduled/configured PUSCH bandwidth.

In this example, the E-PTRS 907 are carried in symbols 5, 8 and 11. The FL DMRS 905 are carried in symbol 2. The RS configuration may comprise information related to time that indicates symbols 2, 5, 8, and 11.

It should be appreciated that the number of resources and the positioning in frequency and time is shown as an example only.

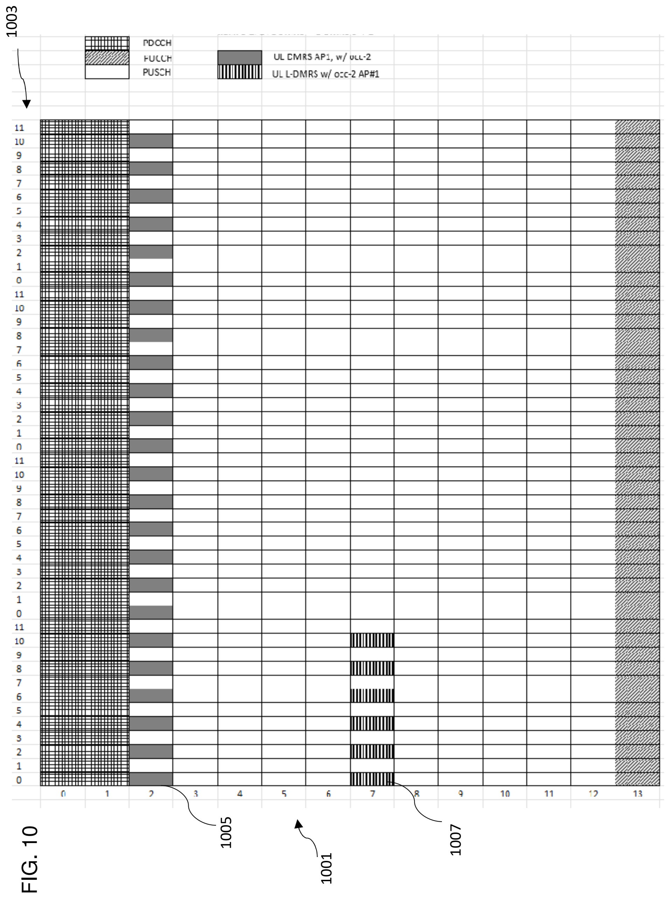

FIG. 10 shows a schematic representation of a PUSCH transmission based on a third RE pattern for reference signals. There are 14 OFDM symbols 1001 and 48 REs 1003, wherein the REs 1003 are split into 4 groups of 12 REs (i.e., 12 REs per RB/PRB).

The third RE pattern comprises FL DMRS 1005 and L-DMRS 1007. In the example of FIG. 10, the L-DMRS 1007 is defined as (6,4,1). The x-value of '6' means that there are 6 REs per antenna port configured with an L-DMRS 1007 in a PRB. The y-value of '4' means that each 4th PRB across the BW of the PUSCH is configured with RSs. The z-value of '1' means that 1 symbol in the PRB carries the 6 REs configured with an L-DMRS 1007. Stated differently, one L-DMRS antenna port is configured with six REs into every fourth PRB across a scheduled/configured PUSCH bandwidth.

In this example, the L-DMRS 1007 are carried in symbol 7. The FL DMRS 1005 are carried in symbol 2. The RS configuration may comprise information related to time that indicates symbols 2 and 7.

It should be appreciated that the number of resources and the positioning in frequency and time is shown as an example only.

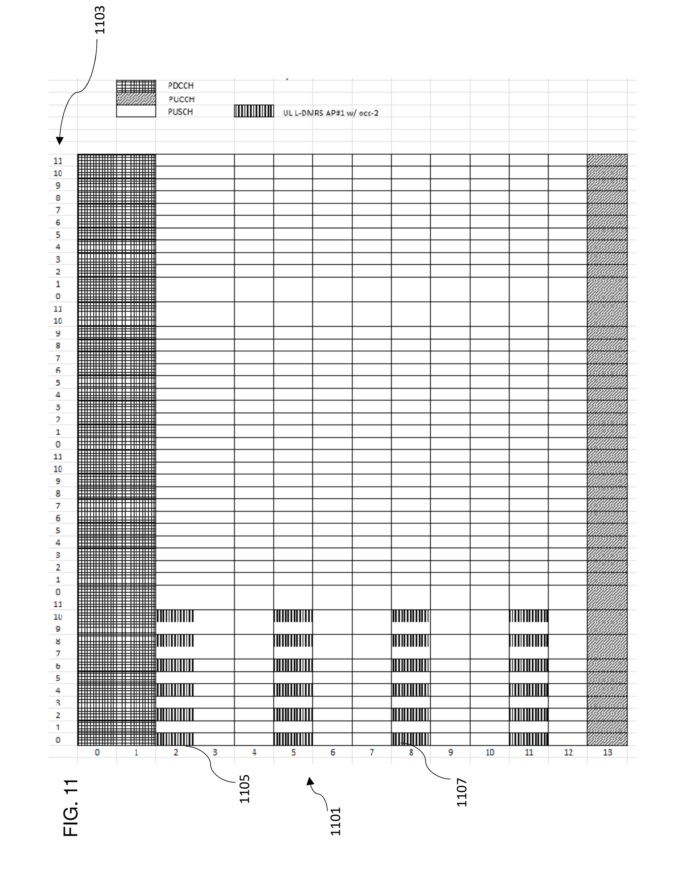

FIG. 11 shows a schematic representation of a PUSCH transmission based on a fourth RE pattern for reference signals. There are 14 OFDM symbols 1101 and 48 REs 1103, wherein the REs 1103 are split into 4 groups of 12 REs (i.e., 12 REs per PRB).

The fourth RE pattern comprises L-DMRS 1105 and L-DMRS 1107. In the example of FIG. 11, the L-DMRS 1105 is (6,4,2), and the L-DMRS 1107 is (6,4,2). Alternatively, L-DMRS (6,4,2) + L-DMRS (6,4,2) could be defined as L-DMRS (6,4,4). L-DMRS(6,4,1)+L-DMRS(6,4,3) could also be defined as (6,4,4). For L-DMRS (6,4,4), there is a DMRS sequence that is twice as long as L-DMRS(6,4,2)+L-DMRS(6,4,2), whereby there are two different L-DMRS(6,4,2) DMRS sequences. The x-value of '6' means that there are 6 REs per antenna port configured with an L-DMRS 1107 in a PRB. The y-value of '4' means that each 4th PRB across the BW of the PUSCH is configured with RSs. The z-value of '2' means that 2 symbols in the PRB carries the 6 REs configured with an L-DMRS 1107. As the fourth RS pattern has two sets of L-DMRS, then pattern is repeated within the PRB such that 4 symbols carry L-DMRS. One L-DMRS antenna port is configured with six REs into every fourth PRB across a scheduled/configured PUSCH bandwidth.

In this example, the L-DMRS 1105, 1107 are carried in symbols 2, 5, 8 and 11. The RS configuration may comprise information related to time that indicates symbols 2, 5, 8 and 11.

It should be appreciated that the number of resources and the positioning in frequency and time is shown as an example only.

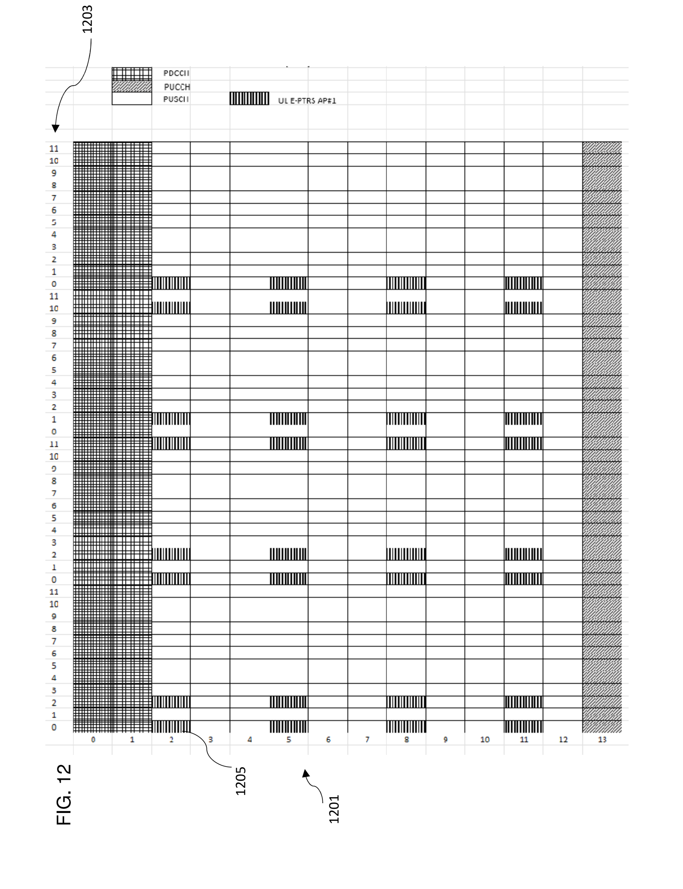

FIG. 12 shows a schematic representation of a PUSCH transmission based on a fifth RE pattern for reference signals. There are 14 OFDM symbols 1201 and 48 REs 1203, wherein the REs 1203 are split into 4 groups of 12 REs (i.e., 12 REs per PRB). It is worth noting that for simplicity only two PRBs are shown and actual PRB allocation of RS can be larger or smaller depending on the configuration configured by the network.

The fifth RE pattern comprises E-PTRS 1205. In the example of FIG. 12, the E-PTRS 1205 is defined as (2,1,4), is. The x-value of '2' means that there are 2 REs per antenna port configured with an E-PTRS in a PRB. The y-value of '1' means that each PRB across the BW of the PUSCH is configured with RSs. The z-value of '4' means that 4 symbols in the PRB each carries the 2 REs configured with an E-PTRS. In other examples, the fifth RS pattern may have two sets of E-PTRS (e.g., each being (2,2,2) that are each configured with a y-value of 2 (i.e., every other PRB to comprise RSs) this means that every PRB across the BW of the PUSCH carries RS. For example, E-PTRS (2,2,2) + E-PTRS (2,2,2) may instead be defined as E-PTRS (2,1,4).

In some examples, when a symmetric allocation is followed, then a combination of different RS may be such that RE patterns of configured antenna ports are not the same across different symbols. For example, there may be the following configuration: E-PTRS (4,2,2) + E-PTRS (2,2,2), or E-PTRS (4,1,1) + E-PTRS (4,2,1) + E-PTRS (4,3,1) + E-PTRS (4,4,1).

In this example, the E-PTRS 1205, 1207 are carried in symbols 2, 5, 8 and 11. The RS configuration may comprise information related to time that indicates symbols 2, 5, 8 and 11.

It should be appreciated that the number of resources and the positioning in frequency and time is shown as an example only.

In the examples depicted in FIGS. 8 to 12, a reduction in RS overhead is achievable. For example, in comparison to FL DMRS + 3, as depicted in FIG. 4, a considerable reduction in RS overhead is achievable. This is shown in Table 2 below, which gives a numerical reduction (in %) between FL DMRS + 3 and a number of different RS configurations according to examples herein.

Table 2: Example of RS overhead reduction with different RS configurations with respect to 1FL + 3 additional DMRS.

| RS configuration | RS overhead reduction vs. FL DMRS + 3 (%) |
|---|---|
| FL DMRS + E-PTRS (2,2,3) | 62.5 |
| FL DMRS + E-PTRS (2,2,4) | 58.3 |
| FL DMRS + E-PTRS (4,4,4) | 58.3 |
| FL DMRS + E-PTRS (2,2,5) | 54.2 |
| FL DMRS + E-PTRS (4,4,5) | 54.2 |
| FL DMRS + E-PTRS (4,2,3) | 50 |

As described above, in some examples, there may be a configuration for RSs wherein there is a combination of different types or the same types of RSs. For example, E-PTRS + E-PTRS. Both E-PTRS may be configured with (1,1,1), wherein for (x,y,z) 'x' is a defined number of REs per antenna port per PRB, 'y' is a defined PRB density, and 'z' is a defined number of symbols. In this manner, for an example of E-PTRS(1,1,1) + E-PTRS(1,1,1) this means that there are two E-PTRS(1,1,1) combined. So, in principal, E-PTRS(1,1,1) + E-PTRS(1,1,1) could equally be expressed as E-PTRS(1,1,2).

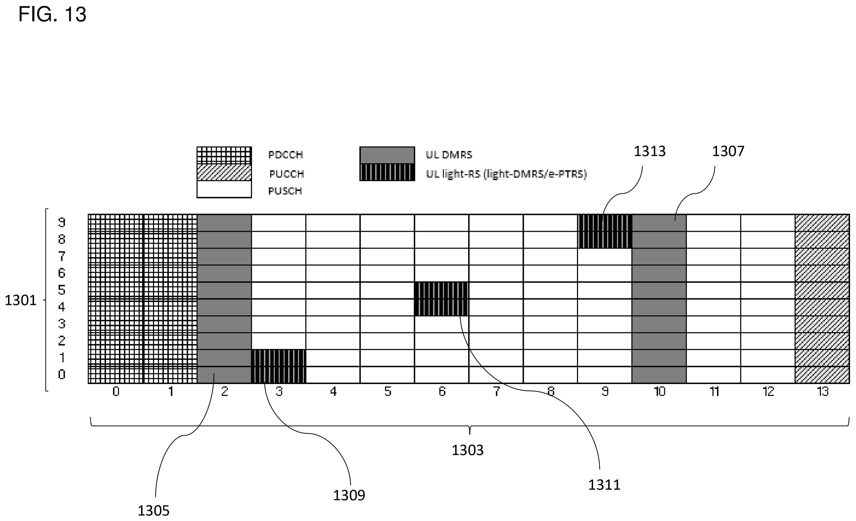

FIG. 13 shows a schematic representation of a PUSCH transmission based on a sixth RE pattern for reference signals with frequency hopping. There are 10 PRBs 1301, which are labelled 0 through 9. There are 14 OFDM symbols 1303, labelled 1 through 13. Symbols 0 and 1 and carry PDCCH in all of the PRBs 1301. Symbol 13 carries PUCCH in all of the PRBs 1301.

Symbols 2 to 12 carry PUSCH. In this example, symbols 2, 3, 6, 9 and 10 carry RS. An RS configuration associated with the PUSCH of FIG. 13 indicates that the type of frequency hopping is fractional (or part, or partial, hopping). The hopping bandwidth is 2 PRB (i.e., 2 PRBs in frequency domain are 'grouped' together to carry RSs). A hopping offset is 2 (i.e., 2 PRBs are 'skipped' or 'hopped' in frequency domain). The type of RS is L-DMRS. In other examples, the type of RS is E-PTRS. The density level between PRBs indicates every PRB. The number of RS antenna ports is 4.

In addition to the L-DMRS, the PUSCH also carries FL DMRS 1305 and DMRS 1307It is noted that there is no frequency hopping for the FL DMRS 1305 and the DMRS 1307. FL DMRS 1305 and the DMRS 1307 are carried in all PRBs 1301 in symbols 2 and 10 respectively.

Based on the RS configuration, PRBs 0-1, symbol 3, carries a first L-DMRS 1309. Due to the frequency hopping, the frequency of the RS changes at the next instance in time that the RS is sent. Stated differently, a second RS 1311 is located at PRBs 4-5, symbol 6 (i.e., the frequency has changed). The pattern continues such that a third RS 1313 is located at PRBs 8-9 symbol 9.

In this example, the RS 1305, 1307, 1309, 1311, 1313 are carried in symbols 2, 3, 6, 9 and 10. The RS configuration may comprise information related to time that indicates symbols 2, 3, 6, 9 and 10.

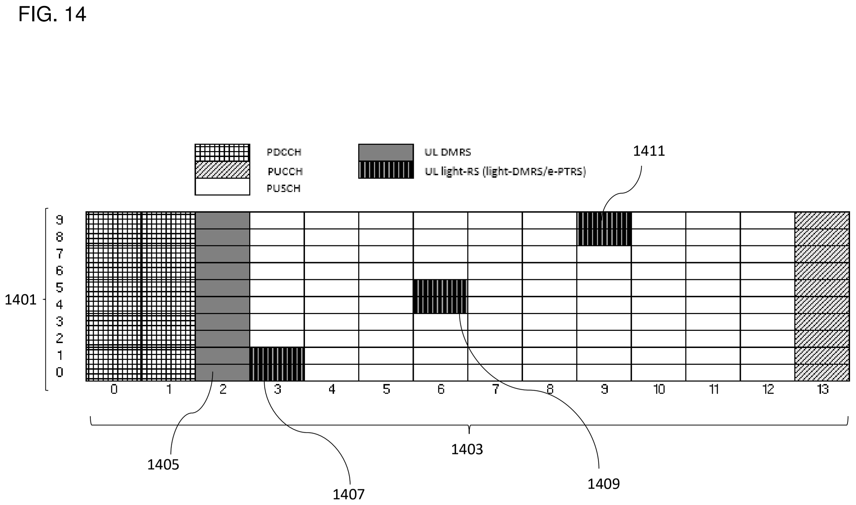

FIG. 14 shows a schematic representation of a PUSCH transmission based on a seventh RS pattern with frequency hopping.

There are 10 PRBs 1401, which are labelled 0 through 9. There are 14 OFDM symbols 1403, labelled 1 through 13. Symbols 0 and 1 and carry PDCCH in all of the PRBs 1401. Symbol 13 carries PUCCH in all of the PRBs 1401.

Symbols 2 to 12 carry PUSCH. In this example, symbols 2, 3, 6, and 9 carry RS. An RS configuration associated with the PUSCH of FIG. 14 indicates that the type of frequency hopping is fractional. The hopping bandwidth is 2 PRB (i.e., 2 PRBs in frequency domain are 'grouped' together to carry RSs). A hopping offset is 2 (i.e., 2 PRBs are 'skipped' or 'hopped' in frequency domain). The type of RS is L-DMRS. In other examples, the type of RS is E-PTRS. The density level between PRBs indicates every PRB. The number of RS antenna ports is 4.

The PUSCH also carries FL DMRS 1405 as well as the L-DMRS. It is noted that there is no frequency hopping for the FL DMRS 1405. FL DMRS 1405 is carried in all PRBs 1301 in symbol 2.

Based on the RS configuration, PRBs 0-1, symbol 3, carries a first L-DMRS 1407. Due to the frequency hopping, the frequency of the RS changes at the next instance in time that the RS is sent. Stated differently, a second RS 1409 is located at PRBs 4-5, symbol 6 (i.e., the frequency has changed). The pattern continues such that a third RS 1411 is located at PRBs 8-9 symbol 9.

In this example, the RS 1405, 1407, 1409, and 1411 are carried in symbols 2, 3, 6, and 9. The RS configuration may comprise information related to time that indicates symbols 2, 3, 6, and 9.

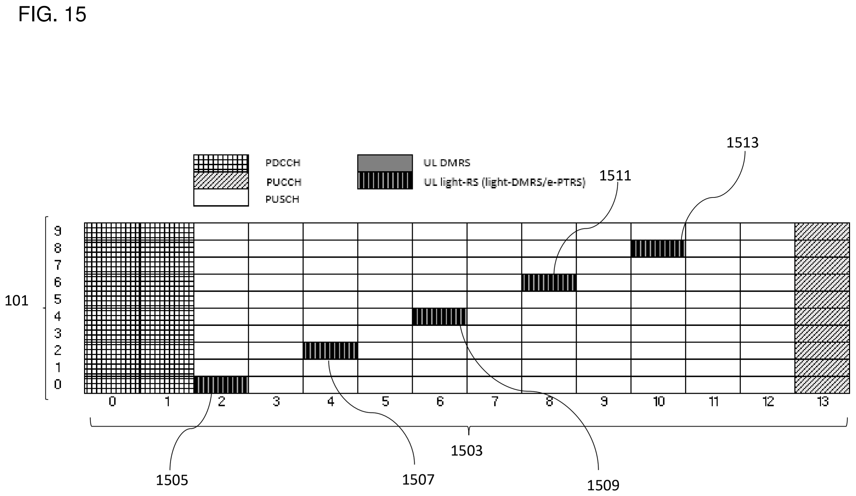

FIG. 15 shows a schematic representation of a PUSCH transmission based on an eighth RE pattern for reference signals with frequency hopping. There are 10 PRBs 1501, which are labelled 0 through 9. There are 14 OFDM symbols 1503, labelled 1 through 13. Symbols 0 and 1 and carry PDCCH in all of the PRBs 1501. Symbol 13 carries PUCCH in all of the PRBs 1501.

Symbols 2 to 12 carry PUSCH. In this example, symbols 2, 4, 6, 8 and 10 carry RS (e.g., L-DMRS or E-PTRS). An RS configuration associated with the PUSCH of FIG. 15 indicates that the type of frequency hopping is fractional. The hopping bandwidth is 1 PRB (i.e., 1 PRB is grouped in frequency domain). A hopping offset is 1 PRB (i.e., 1 PRB is 'skipped' or 'hopped' in the frequency domain). The type of RS is L-DMRS. In other examples, the type of RS is E-PTRS. The density level between PRBs indicates every PRB. The number of RS antenna ports is 4.

Based on the RS configuration, PRB 0, symbol 2, carries a first RS 1505. Due to the frequency hopping, the frequency of the RS changes at the next instance in time that the RS is sent. Stated differently, a second RS 1507 is located at PRB 2, symbol 4 (i.e., PRB 1 is skipped and does not carry an RS). The pattern continues such that a third RS 1509 is located at PRB 4 symbol 6, a fourth RS 1511 is located at PRB 6 symbol 8, and a fifth RS 1513 is located at PRB 8 symbol 10.

In this example, the RS 1505, 1507, 1509, 1511, 1513 are carried in symbols 2, 4, 6, 8 and 10. The RS configuration may comprise information related to time that indicates symbols 2, 4, 6, 8 and 10.

In some examples, a gNB transmits, to a UE, an indication (e.g., with MAC/physical layer signaling) of an identity associated with an RS configuration or a specific RS pattern that is associated with the RS configuration. In such an example, each of a plurality of RS patterns is associated with an identity (e.g., there is an E-PTRS pattern ID or L-DMRS pattern ID). Upon reception of the identity, the UE uses (for a transmission of RS) the indicated RS pattern with corresponding symbol positions and frequency resources with scheduled PUSCH transmission. An example of the identities is shown in Table 3 below.

Table 3: Examples of explicit pattern indication (e.g., ID) with different E-PTRS options with 3-bits

| E-PTRS pattern ID # | Density level between PRBs | RE offset | E-PTRS allocation in time (symbol location) | E-PTRS antenna port ID |
|---|---|---|---|---|
| 1 | Every PRB (1) | 2 | {3,6,9} | 0 |
| 2 | Every $2^{nd}$ (0.5) | {0,6} | {3,6,9,11} | 0 |
| 3 | Every $3^{rd}$ (1/3) | {0,2,6} | {3,6,9,11} | 0 |
| 4 | Every $4^{th}$ (0.25) | {0,2,6,8} | {3,5,7,9,11} | 0 |
| 5 | Every PRB (1) | {0,2},{6,8} | {3,6,9} | 0,1 |
| 6 | Every $2^{nd}$ (0.5) | {0,6},{2,8} | {3,6,9,11} | 0,1 |
| 7 | Every $3^{rd}$ (1/3) | {0,6},{2,8} | {3,6,9,11} | 0,1 |
| 8 | Every $4^{th}$ (0.25) | {0,6},{2,8} | {3,5,7,9,11} | 0,1 |

In some examples, the RS configuration according to examples described above may be relevant to 6G. In 6G, the RS configuration according to examples may be referred to as 6G-LITE-RS, or any other suitable name. An example implementation of a 6G variant of TS 38.331 for an UL 6G-LITE-RS configuration may be:

```
-- ASN1START

-- TAG-6G-LITE-RS-UPLINKCONFIG-START

    6G-LITE-RS-UplinkConfig ::= SEQUENCE {

    6G-LITE-RS-patternType   ENUMERATED   {   6G-E-PTRS+6G-E-PTRS,   6G-L-
    DMRS+6G-L-DMRS, FL-DMRS +E-PTRS, FL-DMRS + L-DMRS, L-DMRS + E-PTRS,
    E-PTRS, L-DMRS   }
```

```
6G-LITE-RS-AntennaPorts  {n1,n2,n3,n4,n5,n6,n7,n8}

6G-LITE-RS-BW SEQUENCE (SIZE (2)) OF INTEGER (1..276)

6G-LITE-RS-Hopping-Type ENUMERATED { Fractional, Full, None}

6G-LITE-RS-Hop-BW SEQUENCE (SIZE (2)) OF INTEGER (1..276)

6G-LITE-RS-Hopping-Fractional-Offset ENUMERATED {offset01, offset10, offset11

6G-LITE-RS-positions    ENUMERATED    {n1,n2,n3,n4,n5,n6,n7,n8,    n9,n10,n11,
n12,n13,n14}

6G-LITE-RS-patternType-6G-E-PTRS-REs-Per-AP                 ENUMERATED
{n1,n2,n6,n8,n12}

}

}

-- TAG-6G-LITE-RS-UPLINKCONFIG-STOP

-- ASN1STOP
```

It should be appreciated that the implementation provided above is an example only.

In some examples, a UE receives an allocation related to E-PTRS. For example, an allocation for FL DMRS and E-PTRS, or for E-PTRS and E-PTRS.

For FL DMRS and E-PTRS, the following method may be performed by a UE:

At A1, (raw) channel estimates that are associated with antenna ports of FL DMRS are determined. For example, the UE determines the raw channel estimates associated with the antenna ports using a least square (LS)-based channel estimator between received FL DMRS samples and a known sequence of FL DMRS, according to specified DMRS time and frequency locations (e.g., in NR (type-1/type2, e-type1/e-type2), or 6G DMRS antenna port RE patterns). When orthogonal cover code (OCC) is used (e.g., in multi-port DMRS cases), OCC is applied to DMRS estimates before determining the raw channel estimates. In such examples, a mean value of raw channel estimates over an OCC length is determined.

At A2, based on information about the position (e.g., in frequency and/or time) of RSs and information about a number of REs per antenna port comprised in an RS configuration, corresponding raw channel estimates for E-PTRS associated with the antenna ports are determined. For example, the raw channel estimates for E-PTRS associated with the antenna ports are determined using an LS-based channel estimator between received E-PTRS samples and a known sequence of E-PTRS.

At A3, by combining (or stacking) the raw channel estimates of E-PTRS for each antenna port symbol, frequence domain interpolation is performed using Wiener filtering for channel estimates associated with each i) antenna port (or layer), ii) Rx-antenna, and iii) symbol separately.

At A4, time domain interpolation using Wiener filtering is performed between time domain symbols of E-PTRS for each antenna ports (or layer) and Rx-antenna.

At A5, a joint channel estimation based on the FL-DMRS and E-PTRS is performed using 2-dimensional (2D) Wiener filtering.

For E-PTRS and E-PTRS, the following method may be performed by a UE:

At B1, based on information about the position (e.g., in frequency and/or time) of RSs and information about a number of REs per antenna port comprised in an RS configuration, raw channel estimates for E-PTRS associated with the antenna ports are determined. For example, the raw channel estimates for E-PTRS associated with the antenna ports are determined using an LS-based channel estimator between received E-PTRS samples and a known sequence of E-PTRS.

At B2, by combining (or stacking) the raw channel estimates of E-PTRS for each antenna port symbol, frequence domain interpolation is performed using Wiener filtering for channel estimates associated with each antenna port (or layer), Rx-antenna and symbol separately.

At B3, a time domain interpolation using Wiener filtering is performed between time domain symbols of E-PTRS for each antenna ports (or layer) and Rx-antenna.

At B4, channel estimation is performed using 2D Wiener filtering.

In some examples, the UE receives an allocation related to L-DMRS. For example, an allocation for DLMRS and L-DMRS, or for L-DMRS and L-DMRS.

For FL DMRS and L-DMRS, the following method may be performed by a UE:

At C1, (raw) channel estimates that are associated with antenna ports of FL DMRS are determined. For example, the UE determines the raw channel estimates associated with the antenna ports using a least square (LS)-based channel estimator between received FL DMRS samples and a known sequence of FL DMRS, according to specified DMRS time and frequency locations (e.g., in NR (type-1/type2, e-type1/e-type2), or 6G DMRS antenna port RE patterns). When orthogonal cover code (OCC) is used (e.g., in multi-port DMRS cases), OCC is applied to DMRS estimates before determining the raw channel estimates. In such examples, a mean value of raw channel estimates over an OCC length is determined.

At C2, based on information about a density level between PRBs comprised in an RS configuration, corresponding raw channel estimates for L-DMRS associated with antenna ports are determined. For example, the raw channel estimates for L-DMRS associated with the antenna ports are determined using an LS-based channel estimator between received L-DMRS samples and a known sequence of L-DMRS. When orthogonal cover code (OCC) is used (e.g., in multi-port DMRS cases), OCC is applied to DMRS estimates before determining the raw channel estimates. In such examples, a mean value of raw channel estimates over an OCC length is determined.

At C3, by combining (or stacking) the raw channel estimates of L-DMRS for each antenna port symbol, frequence domain interpolation is performed using Wiener filtering for channel estimates associated with each i) antenna port (or layer), ii) Rx-antenna, and iii) symbol separately.

At C4, time domain interpolation using Wiener filtering is performed between time domain symbols of L-DMRS for each antenna ports (or layer) and Rx-antenna.

At C5, joint channel estimation over FL DMRS and L-DMRS is performed using 2D Wiener filtering.

For L-DMRS + L-DMRS, the following method may be performed by a UE:

At D1, based on information about a density level between PRBs comprised in an RS configuration, corresponding raw channel estimates for L-DMRS associated with antenna ports are determined. For example, the raw channel estimates for L-DMRS associated with the antenna ports are determined using an LS-based channel estimator between received L-DMRS samples and a known sequence of L-DMRS. When orthogonal cover code (OCC) is used (e.g., in multi-port DMRS cases), OCC is applied to DMRS estimates before determining the raw channel estimates. In such examples, a mean value of raw channel estimates over an OCC length is determined.

At D2, by combining (or stacking) the raw channel estimates of L-DMRS for each antenna port symbol, frequence domain interpolation is performed using Wiener filtering for channel estimates associated with each i) antenna port (or layer), ii) Rx-antenna, and iii) symbol separately.

At D3, time domain interpolation using Wiener filtering is performed between time domain symbols of L-DMRS for each antenna ports (or layer) and Rx-antenna.

At D4, channel estimation is performed using 2D Wiener filtering.

With the RS configuration being utilized in order to determine a channel estimation (e.g., as shown in A1-A5, B1-B4, C1-C5 and D1-D4), the channel estimation performance may be improved. In particular, channel estimation performance in high speed UE scenarios may be improved whereby denser time domain allocation and sparser frequency domain allocation can provide sufficient or improved channel estimation performance with reduced overhead, which leads to higher throughput.

It should be understood that Wiener filtering is given as an example that may be used for linear interpolation in the above methods A through D. In other examples, any other suitable linear interpolation is used. The performance of Wiener filter has been determined to be suitable in the above methods as it uses the statistical properties of the signal and noise, i.e., produces a good estimate from a noisy signal by minimizing the mean squared error.

One or more of the examples have the advantage that when RS are configured over multiple symbols in time, the frequency density of the RS is reduced. This leads to enhanced opportunities for multiplexing additional co-scheduled e.g. L-DMRS/E-PTRS PUSCH/PDSCH and PUSCH/PDSCH transmission associated with different UEs into same OFDM symbols leading to increased multiplexing capacity of UL/DMRS e.g. L-DMRS/E-PTRS as well as PUSCH/PDSCH.

Some of the examples enable the network to configure RS with enhanced flexibility in time and frequency domain for demodulation purposes of PUSCH/PDSCH by enabling the gNB/UE to perform joint channel estimation based on antenna ports of associated with a combination of different RSs (e.g. L-DMRS, E-PTRS) for PUSCH/PDSCH. This is particularly important in new frequency bands (e.g. >6 GHz) with high mobility and different numerologies. Moreover, additional resource overhead reduction benefits are also obtainable with high rank PDSCH/PUSCH configuration with low UE velocities.

Some of the examples enable the configuring of RS such that RS overhead in 6G for PUSCH demodulation is reduced compared to 5G NR without degrading PUSCH demodulation performance.

Some of the examples enable (6G) RS support for PUSCH demodulation with high MCS values with different numerology options in the presence of high mobility. This may be particularly useful for new frequency bands (e.g. >6 GHz) with high mobility as well as with different numerologies.

By utilizing the proposed RS configuration as described in examples above, a 6G system is able to operate with smaller sub-carrier spacing values instead of using high sub-carrier spacing values. A reason for this is that the proposed RS configuration enables a greater configurability for RS, such that the RS are distributed in a more efficient manner over different time and frequencies without increasing resource overhead such that a UE/gNB is able to perform demodulation of PDSCH/PUSCH more effectively with a more favorable channel estimator. Current NR DMRS configurations often require high resource overhead. As a result of this, a network is able to operate with same sub-carrier spacings over different carrier frequencies simplifying configurations across different carrier frequencies. For example, 30KHz can be used with both 3.5GHz and 7 GHz when the RS configuration according to examples is utilised.

Furthermore, one or more of the examples enables an improvement for PUSCH (or PDSCH) capacity, due to improved multiplexing with co-scheduled UEs, in addition to reduced RS overhead.

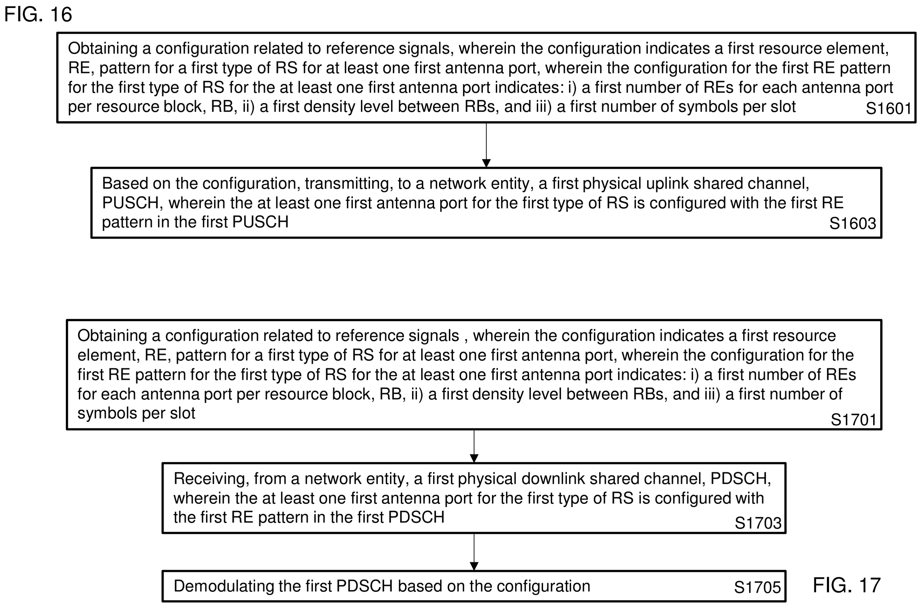

FIG. 16 shows an example method flow performed by an apparatus. The apparatus may be a UE. The apparatus may be comprised in a UE. The apparatus may comprise one or more means for performing the method of FIG. 16. For example, the one or more means may comprise: at least one processor, and at least one memory storing instructions that, when executed by the at least one processor, cause the apparatus to perform the method of FIG. 16. For example, the one or more means may comprise: circuitry configured to perform the method of FIG. 16.

In S1601, the method comprises: obtaining a configuration related to reference signals , wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot.

In S1603, the method comprises: based on the configuration, transmitting, to a network entity, a first physical uplink shared channel, PUSCH, wherein the at least one first antenna port for the first type of RS is configured with the first RE pattern in the first PUSCH.

It should be understood that, in some examples, one or more additional method steps are included in the method flow of FIG. 16 and are performed by the apparatus. In some examples, one or more of the method steps of FIG. 16 detailed above may not be performed, or may be performed in a different order.

FIG. 17 shows an example method flow performed by an apparatus. The apparatus may be a UE. The apparatus may be comprised in a UE. The apparatus may comprise one or more means for performing the method of FIG. 17. For example, the one or more means may comprise: at least one processor, and at least one memory storing instructions that, when executed by the at least one processor, cause the apparatus to perform the method of FIG. 17. For example, the one or more means may comprise: circuitry configured to perform the method of FIG. 17.

In S1701, the method comprises: obtaining a configuration related to reference signals , wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot.

In S1703, the method comprises: receiving, from a network entity, a first physical downlink shared channel, PDSCH, wherein the at least one first antenna port for the first type of RS is configured with the first RE pattern in the first PDSCH.

In S1705, the method comprises: demodulating the first PDSCH based on the configuration.

It should be understood that, in some examples, one or more additional method steps are included in the method flow of FIG. 17 and are performed by the apparatus. In some examples, one or more of the method steps of FIG. 17 detailed above may not be performed, or may be performed in a different order.

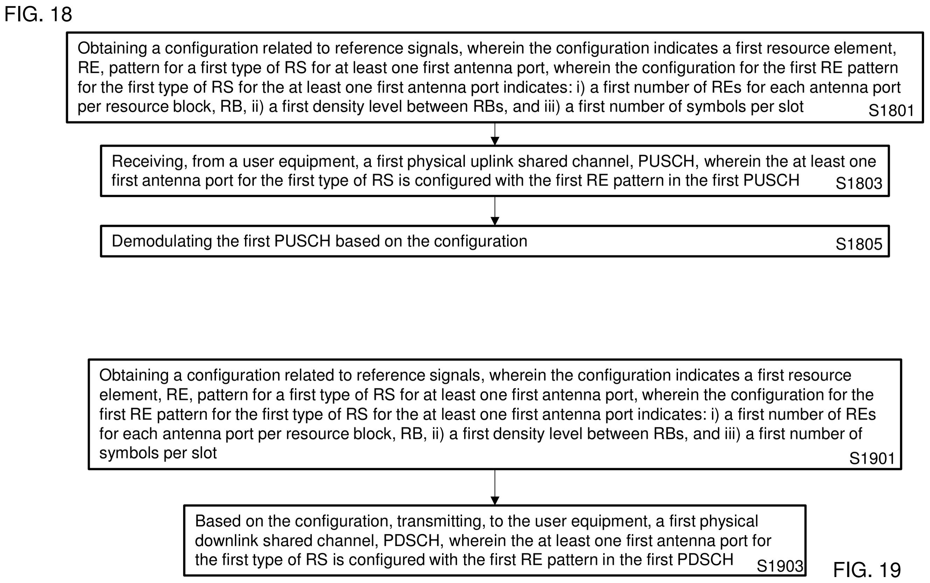

FIG. 18 shows an example method flow performed by an apparatus. The apparatus may be a network node or network entity. For example, the network node/network entity may be a base station, gNB. The apparatus may be comprised in a network node/network entity. The apparatus may comprise one or more means for performing the method of FIG. 18. For example, the one or more means may comprise: at least one processor, and at least one memory storing instructions that, when executed by the at least one processor, cause the apparatus to perform the method of FIG. 18. For example, the one or more means may comprise: circuitry configured to perform the method of FIG. 18.

In S1801, the method comprises: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot.

In S1803, the method comprises: receiving, from a user equipment, a first physical uplink shared channel, PUSCH, wherein the at least one first antenna port for the first type of RS is configured with the first RE pattern in the first PUSCH.

In S1805, the method comprises: demodulating the first PUSCH based on the configuration.

It should be understood that, in some examples, one or more additional method steps are included in the method flow of FIG. 18 and are performed by the apparatus. In some examples, one or more of the method steps of FIG. 18 detailed above may not be performed, or may be performed in a different order.

FIG. 19 shows an example method flow performed by an apparatus. The apparatus may be a network node or network entity. For example, the network node/network entity may be a base station, gNB. The apparatus may be comprised in a network node/network entity. The apparatus may comprise one or more means for performing the method of FIG. 19. For example, the one or more means may comprise: at least one processor, and at least one memory storing instructions that, when executed by the at least one processor, cause the apparatus to perform the method of FIG. 19. For example, the one or more means may comprise: circuitry configured to perform the method of FIG. 19.

In S1901, the method comprises: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot.

In S1903, the method comprises: based on the configuration, transmitting, to the user equipment, a first physical downlink shared channel, PDSCH, wherein the at least one first antenna port for the first type of RS is configured with the first RE pattern in the first PDSCH.

It should be understood that, in some examples, one or more additional method steps are included in the method flow of FIG. 19 and are performed by the apparatus. In some examples, one or more of the method steps of FIG. 19 detailed above may not be performed, or may be performed in a different order.

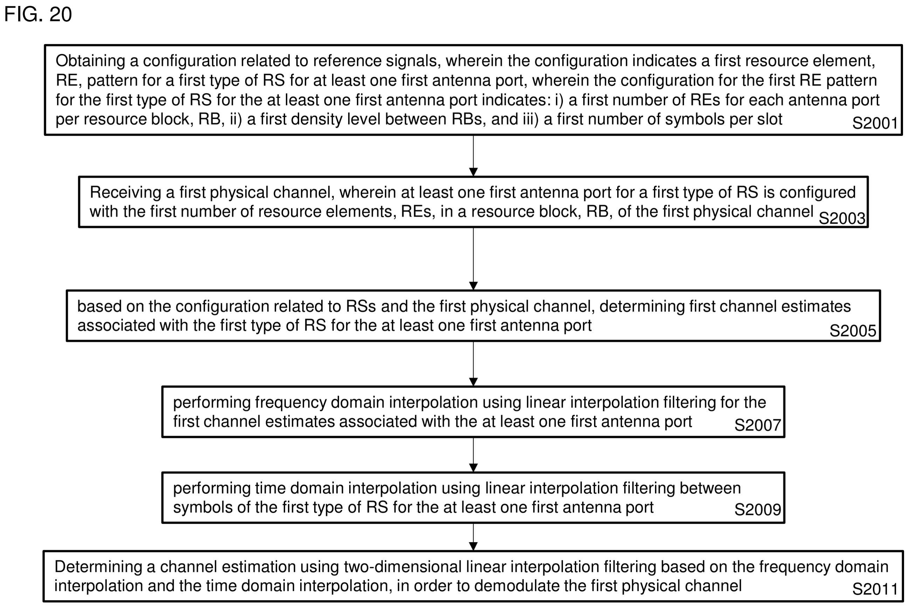

FIG. 20 shows an example method flow performed by an apparatus. The apparatus may be a UE. The apparatus may be comprised in a UE. The apparatus may comprise one or more means for performing the method of FIG. 20. For example, the one or more means may comprise: at least one processor, and at least one memory storing instructions that, when executed by the at least one processor, cause the apparatus to perform the method of FIG. 20. For example, the one or more means may comprise: circuitry configured to perform the method of FIG. 20.

In S2001, the method comprises: obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot.

In S2003, the method comprises: receiving a first physical channel, wherein at least one first antenna port for a first type of RS is configured with the first number of resource elements, REs, in a resource block, RB, of the first physical channel.

In S2005, the method comprises: based on the configuration related to RSs and the first physical channel, determining first channel estimates associated with the first type of RS for the at least one first antenna port.

In S2007, the method comprises: performing frequency domain interpolation using linear interpolation filtering for the first channel estimates associated with the at least one first antenna port.

In S2009, the method comprises: performing time domain interpolation using linear interpolation filtering between symbols of the first type of RS for the at least one first antenna port.

In S2011, the method comprises: determining a channel estimation using two-dimensional linear interpolation filtering based on the frequency domain interpolation and the time domain interpolation, in order to demodulate the first physical channel.

It should be understood that, in some examples, one or more additional method steps are included in the method flow of FIG. 20 and are performed by the apparatus. In some examples, one or more of the method steps of FIG. 20 detailed above may not be performed, or may be performed in a different order.

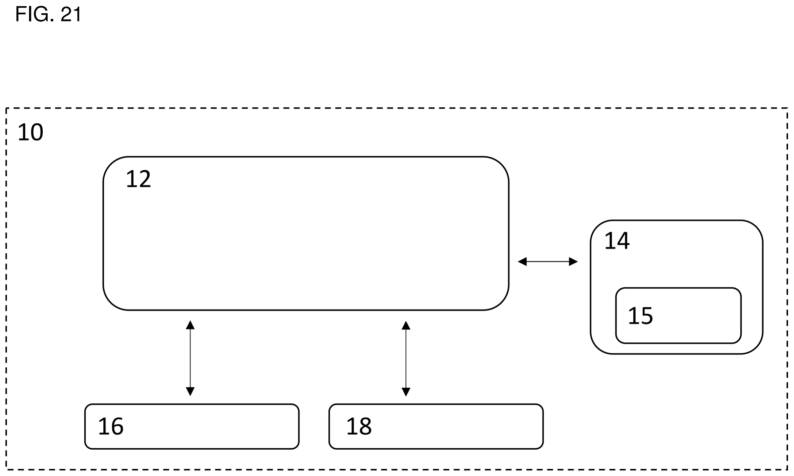

FIG. 21 shows a schematic representation of an apparatus. FIG. 21 shows, by way of example, a block diagram of an apparatus 10. The apparatus 10 comprises, for example, at least one processor 12 and at least one memory 14 storing instructions 15 that, when executed by the at least one processor, cause the apparatus 10 at least to perform the method or methods as disclosed herein, and any of the embodiments thereof. In an example, the at least one memory and the instructions (e.g. a computer program code, software), are configured, with the at least one processor, to cause the apparatus 10 to perform the method or methods as disclosed herein, and any of the embodiments thereof.

A processor 12 may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a user equipment, to perform various functions) and (c) hardware circuit(s) and or processor(s), such as a microprocessor(s) or a portion of a microprocessor(s), that requires software (e.g.,

firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The memory 14 may be implemented using any suitable data storage technology. The memory may comprise a database for storing data. The memory 14 may be at least in part external to apparatus 10 but accessible to apparatus 10.

The instructions 15 may be comprised in a computer readable medium or a non-transitory computer readable medium. A term non-transitory, as used herein, is a limitation of the medium itself (i.e. tangible, not a signal) as opposed to a limitation on data storage persistency (e.g. random access memory, RAM, vs. read only memory, ROM).

For example, the apparatus 10 is a terminal device or UE, such as the UE associated with FIG. 7. As another example, the apparatus is comprised in such a terminal device or UE, e.g. as a chipset configured to control the terminal device or UE. The apparatus 10 may be caused or configured to perform at least the method of any of FIGS. 16, 17 or 20 and/or any one or more of the embodiments described.

As another example, the apparatus 10 is a network node (e.g., a gNB), e.g. the network node associated with Fig. 7. In another embodiment, the apparatus is comprised in such a network node, e.g. as a chipset configured to control the network node. The apparatus 10 may be caused or configured to perform at least the method of any of FIGS. 18 to 19 and/or any one or more of the embodiments described.

The apparatus 10 comprises a radio interface 16. The radio interface 16 may provide the apparatus 10 with communication capabilities. The radio interface 16 may comprise a receiver configured to receive information in accordance with at least one cellular or non-cellular standard. The radio interface 16 may comprise a transmitter configured to transmit information in accordance with at least one cellular or non-cellular standard. The receiver may comprise more than one receiver. The transmitter may comprise more than one transmitter. The radio interface 16 may comprise a transceiver configured to receive and transmit information in accordance with at least one cellular or non-cellular standard. The transceiver may comprise more than one transceiver.

The apparatus 10 may comprise a user interface 18 comprising, for example, at least one of a keypad, a microphone, a touch display, a display, a speaker, etc. The user interface 18 may be used to control the apparatus by the user. The user interface 18 may be external to the apparatus 10. For example, the apparatus 10 may be connected to another device, such as a computer, either via wireless or wired connection, and the apparatus 10 is controlled by the user via the computer.

In an embodiment, at least some of the processes described herein may be carried out by an apparatus comprising means for carrying out at least some of the described processes. Means for performing method steps as disclosed herein may include software and/or hardware components of the apparatus 10. For example, the at least one processor 12, the memory 14, and the computer program code form means for carrying out the method or methods as disclosed herein, and any of the embodiments thereof. As used herein the term "means" is to be construed in singular form, i.e. referring to a single element, or in plural form, i.e. referring to a combination of single elements. Therefore, terminology "means for [performing A, B, C]", is to be interpreted to cover an apparatus in which there is only one means for performing A, B and C, or where there are separate means for performing A, B and C, or partially or fully overlapping means for performing A, B, C. Further, terminology "means for performing A, means for performing B, means for performing C" is to be interpreted to cover an apparatus in which there is only one means for performing A, B and C, or where there are separate means for performing A, B and C, or partially or fully overlapping means for performing A, B, C. It is noted that while the above describes example embodiments, there are several variations and modifications which may be made to the disclosed solution without departing from the scope of the present invention.

The examples may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The examples may be implemented by computer software stored in a memory and executable by at least one data processor of the involved entities or by hardware, or by a combination of software and hardware. Further in this regard it should be noted that any procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The term "non-transitory", as used herein, is a limitation of the medium itself (i.e. tangible, not a signal) as opposed to a limitation on data storage persistency (e.g. RAM vs ROM).

As used herein, "at least one of the following:<a list of two or more elements>" and "at least one of: <a list of two or more elements>" and similar wording, where the list of two or more elements are joined by "and", or "or", mean at least any one of the elements, or at least any two or more of the elements, or at least all of the elements.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi core processor architecture, as non-limiting examples.

As used herein, the terms "means for", "means for performing operations including", "means configured to perform operations including", or "means configured to perform" (or similar) may be any means that are suitable for performing the feature(s). The "means" may be configured to perform one or more of the functions and/or method steps previously described. For example, the "means" may include one or more of: at least one processor, at least one memory, transceiver circuitry, antenna circuitry, etc. It should be understood that these are provided as non-limiting examples.

Alternatively, or additionally some examples may be implemented using circuitry. The circuitry may be configured to perform one or more of the functions and/or method steps previously described. That circuitry may be provided in the base station and/or in the communications device.

As used in this application, the term "circuitry" may refer to one or more or all of the following: (a) hardware-only circuit implementations (such as implementations in only analogue and/or digital circuitry); (b) combinations of hardware circuits and software, such as: (i) a combination of analogue and/or digital hardware circuit(s) with software/firmware and (ii) any portions of hardware processor(s) with software (including digital signal processor(s)), software, and memory(ies) that work together to cause an apparatus, such as the communications device or base station to perform the various functions previously described; and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to uses of the term "means" in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device. The term circuitry also covers, for example and if applicable to the particular claim element, a baseband integrated circuit or processor integrated circuit for a mobile device or a similar integrated circuit in a server, a cellular network device, or other computing or network device.

The foregoing description has provided by way of exemplary and non-limiting examples a full and informative description of some embodiments. However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

## Claims

1. A user equipment comprising means for:

   obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and
   based on the configuration, transmitting, to a network entity, a first physical uplink shared channel, PUSCH, wherein the at least one first antenna port for the first type of RS is configured with the first RE pattern in the first PUSCH.

2. The user equipment according to claim 1, wherein the configuration for the first RE pattern for the first type of RS for the at least one first antenna port indicates: iv) information related to at least one symbol position for the first RE pattern.

3. The user equipment according to claim 1 or claim 2, wherein the at least one first antenna port for the first type of RS is configured with the first number of REs in an RB across the first number of symbols, in the first PUSCH, based on i) the first number of REs for each antenna port per RB and iii) the first number of symbols per slot.

4. The user equipment according to any of claims 1 to 3, wherein the configuration for the first RE pattern for the first type of RS for the at least one first antenna port indicates at least one of the following: v) a hopping in frequency, or vi) a hopping in time, between RBs across a scheduled bandwidth of the first PUSCH.

5. The user equipment according to any of claims 1 to 4, wherein there are a plurality of RBs across a bandwidth of the first PUSCH, and wherein the at least one first antenna port for the first type of RS is configured with the first number of REs in at least every second RB of the plurality of RBs across the bandwidth of the first PUSCH, based on ii) the first density level between RBs.

6. The user equipment according to any of claims 1 to 5, wherein the configuration for RSs indicates a second RE pattern for a second type of RS for at least one second antenna port, wherein the configuration for the second RE pattern for the second type of RS for the at least one second antenna port indicates: i) a second number of REs for each antenna port per resource block, RB, ii) a second density level between RBs, iii) a second number of symbols per slot, and wherein the configuration for the second RE pattern for the second type of RS for the at least one second antenna port indicates: iv) information related to at least one symbol position for the second RE pattern.

7. The user equipment according to claim 6, wherein, for the first PUSCH that is transmitted to the network entity, the at least one first antenna port for the first type of RS in the first PUSCH is configured with the first RE pattern and at least one second antenna port for the second type of RS in the first PUSCH is configured with the second RE pattern.

8. The user equipment according to claim 6 or claim 7, wherein at least one of the following:

   based on the i) the first number of REs for each antenna port per RB, the REs in an RB configured with at least one of the first type of RS, are uniformly distributed throughout the REs of the RB, or
   based on the i) the second number of REs for each antenna port per RB, the REs in an RB configured with at least one of the second type of RS, are uniformly distributed throughout the REs of the RB.

9. The user equipment according to any of claims 6 to 8, wherein the configuration for the second RE pattern for the second type of RS for the at least one second antenna port indicates at least one of the following: v) a hopping in frequency, or vi) a hopping in time, between RBs across a scheduled bandwidth of the first PUSCH.

10. The user equipment according to any of claims 6 to 9, wherein the at least one first antenna port for the first type of RS that is configured with the first number of REs and the at least one second antenna port for the second type of RS that is configured with the second number of REs are configured with REs in different symbols of a slot of the first PUSCH.

11. The user equipment according to any of claims 6 to 10, wherein there are a plurality of RBs across a bandwidth of the first PUSCH, and wherein the at least one second antenna port for the second type of RS is configured with the second number of REs in at least every second RB of the plurality of RBs across the bandwidth of the first PUSCH, based on ii) the second density level between RBs.

12. The user equipment according to any of claims 1 to 11, wherein the configuration indicates: the first RE pattern for the first type of RS for at least one first antenna port, and an additional RE pattern for the first type of RS for the at least one first antenna port.

13. The user equipment according to any of claims 1 to 12, wherein the first type of RS is one of: a demodulation reference signal, DMRS, or a phase-tracking reference signal, PTRS, and wherein the second type of RS is one of: a DMRS, or a PTRS.

14. A network entity comprising at least one processor, and at least one memory storing instructions that, when executed by the at least one processor, cause the network entity to perform:

   obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot;
receiving, from a user equipment, a first physical uplink shared channel, PUSCH, wherein the at least one first antenna port for the first type of RS is configured with the first RE pattern in the first PUSCH; and demodulating the first PUSCH based on the configuration.

15. A method performed by a user equipment, the method comprising:

obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot; and based on the configuration, transmitting, to a network entity, a first physical uplink shared channel, PUSCH, wherein the at least one first antenna port for the first type of RS is configured with the first RE pattern in the first PUSCH.

FIG. 1

EP 4 757 229 A1

FIG. 2

FIG. 3

FIG. 4

EP 4 757 229 A1

FIG. 5

FIG. 6

## FIG. 7

**UE** ... **gNB**

S701. Capability signalling about supported RS types that are supported by the UE for PUSCH transmission

S702. Capability signalling about supported types of frequency hopping for RSs and multiplexing for PUSCH transmission

S703. Determine RS configuration for the UE for a PUSCH transmission

S704. RS configuration for PUSCH, e.g., RRC signalling

S705. Store RS configuration for PUSCH transmission

S706. Scheduling request for UL data transmission

S707. Scheduling grant for PUSCH, e.g., via PHY layer signalling, or PDCCH with DCI. First indication (e.g., 'REs for data with RS') = '0' or '1'

S708. Based on the RS configuration, determine an RE pattern, a number of REs, frequency information, and time information, for RSs in each RB/PRB across a scheduled PUSCH bandwidth

*Alt.1 (First indication = 1)* S709a. UE rate-matches the PUSCH TB based on the RE pattern and 'empty' RE locations in freq domain not used for the RE pattern

S711. Receive PUSCH and determine channel estimates for PUSCH demodulation

*Alt.2 (First indication = 0)* S709b. UE rate-matches the PUSCH TB based on the RE pattern

S712. Based on the channel estimation, demodulate the PUSCH transmission

S710. Transmit PUSCH based on the RE pattern

FIG. 8

FIG. 9

FIG. 10

FIG. 11

FIG. 12

## FIG. 13

FIG. 14

FIG. 15

**FIG. 16**

Obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot S1601

Based on the configuration, transmitting, to a network entity, a first physical uplink shared channel, PUSCH, wherein the at least one first antenna port for the first type of RS is configured with the first RE pattern in the first PUSCH S1603

Obtaining a configuration related to reference signals , wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot S1701

Receiving, from a network entity, a first physical downlink shared channel, PDSCH, wherein the at least one first antenna port for the first type of RS is configured with the first RE pattern in the first PDSCH S1703

Demodulating the first PDSCH based on the configuration S1705

**FIG. 17**

**FIG. 18**

Obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot     S1801

Receiving, from a user equipment, a first physical uplink shared channel, PUSCH, wherein the at least one first antenna port for the first type of RS is configured with the first RE pattern in the first PUSCH     S1803

Demodulating the first PUSCH based on the configuration     S1805

Obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot     S1901

Based on the configuration, transmitting, to the user equipment, a first physical downlink shared channel, PDSCH, wherein the at least one first antenna port for the first type of RS is configured with the first RE pattern in the first PDSCH     S1903

**FIG. 19**

## FIG. 20

Obtaining a configuration related to reference signals, wherein the configuration indicates a first resource element, RE, pattern for a first type of RS for at least one first antenna port, wherein the configuration for the first RE pattern for the first type of RS for the at least one first antenna port indicates: i) a first number of REs for each antenna port per resource block, RB, ii) a first density level between RBs, and iii) a first number of symbols per slot · S2001

Receiving a first physical channel, wherein at least one first antenna port for a first type of RS is configured with the first number of resource elements, REs, in a resource block, RB, of the first physical channel · S2003

based on the configuration related to RSs and the first physical channel, determining first channel estimates associated with the first type of RS for the at least one first antenna port · S2005

performing frequency domain interpolation using linear interpolation filtering for the first channel estimates associated with the at least one first antenna port · S2007

performing time domain interpolation using linear interpolation filtering between symbols of the first type of RS for the at least one first antenna port · S2009

Determining a channel estimation using two-dimensional linear interpolation filtering based on the frequency domain interpolation and the time domain interpolation, in order to demodulate the first physical channel · S2011

FIG. 21

Europäisches
Patentamt

European
Patent Office

Office européen
des brevets

# EUROPEAN SEARCH REPORT

**Application Number**

EP 25 21 8280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/052478 A1 (REN YUWEI [CN] ET AL) 16 February 2023 (2023-02-16) * paragraph [0059] * * paragraph [0093] * ----- | 1-15 | INV. H04L5/00 |
| Y | LG ELECTRONICS: "Discussion on rate matching", 3GPP DRAFT; R1-1715856 RMR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nagoya, Japan; 20170918 - 20170921 12 September 2017 (2017-09-12), XP051329548, Retrieved from the Internet: URL:http://www.3gpp.org/ftp/tsg_ran/WG1_RL 1/TSGR1_AH/NR_AH_1709/Docs/ [retrieved on 2017-09-12] * page 5 - page 6 * ----- | 1-15 | |

**TECHNICAL FIELDS SEARCHED (IPC)**

H04L

The present search report has been drawn up for all claims

| Place of search | Date of completion of the search | Examiner |
|---|---|---|
| The Hague | 13 February 2026 | Koukourlis, Sotirios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8280

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2026

| Patent document cited in search report | Publication date | Patent family member(s) | Publication date |
|---|---|---|---|
| US 2023052478 A1 | 16-02-2023 | CN 115088298 A | 20-09-2022 |
| | | EP 4104503 A1 | 21-12-2022 |
| | | US 2023052478 A1 | 16-02-2023 |
| | | WO 2021159473 A1 | 19-08-2021 |
| | | WO 2021159553 A1 | 19-08-2021 |

EPO FORM P0459

For more details about this annex : see Official Journal of the European Patent Office, No. 12/82